# EUROPEAN PATENT APPLICATION

(11) **EP 1 371 403 A2**
(43) Date of publication of application: **17.12.2003**
(21) Application number: 03009338.9
(22) Date of filing: 24.04.2003
(51) Int. Cl.: A63F 13/12

(54) **Statistics system for online console-based gaming**

(30) Priority: 10.06.2002 US 170001
(71) Applicant: MICROSOFT CORPORATION, Redmond, Washington 98052-6399 (US)
(72) Inventor: Caiafa, Daniel, Redmond, Washington 98052 (US); Vanantwerp, Mark D., Redmond, Washington 98053 (US)
(74) Representative: Grünecker, Kinkeldey, Stockmair & Schwanhäusser Anwaltssozietät

(57) **Abstract**

In a statistics system for online console-based gaming, a user's rating is added to the system by inserting an identifier of the user into an appropriate location in a rating table. The user is also assigned to one of multiple rating groups, and a count of users associated with that rating group is modified accordingly. A relative position of the user in the assigned rating group is also associated with the user, and the relative positions of any other users assigned to that same rating group are modified accordingly. A user's ranking is retrieved by identifying which of the multiple rating groups the user is assigned to and generating a count of how many users are assigned to groups with higher rating ranges than the user's group. The user's relative position within the user's group is then added to the count to generate the ranking of the user.

## Description

### TECHNICAL FIELD

This invention relates to computer and online systems, and particularly to a statistics system for online console-based gaming.

### BACKGROUND

Traditionally, gaming systems with a dedicated console were standalone machines that accommodated a limited number of players (e.g., 2-4 players). Personal computer-based gaming grew in popularity in part due to the ability to play games online with many remote players over the Internet. Thus, one trend for dedicated gaming systems is to provide capabilities to facilitate gaming over a network, such as Internet-based online gaming.

One such capability, important to many users, is the ability to maintain player rankings. Such rankings allow the players to rank themselves against other players based on various game-dependent attributes, such as fastest time, most points, most items collected, etc. It is anticipated that players will want to be presented with various information related to these rankings, such as which players are in the top ten or top hundred rankings, what a particular player's ranking is, what is the score of the next higher player (e.g., informing the user what score he or she needs to obtain in order to advance in the rankings), and so forth.

However, as the number of players increases, the complexity and difficulties faced in designing a system to maintain such rankings also increases. The Internet allows for relatively easy communication among individuals throughout the world, so the number of players for which rankings may need to be maintained can easily be on the order of hundreds of thousands, if not millions or more. Currently, systems are not able to provide such information regarding player rankings when presented with such large numbers of players.

The statistics system for online console-based gaming described below solves these and other problems.

### SUMMARY

A statistics system for online console-based gaming is described herein.

In accordance with certain embodiments, a user's score is received from a game console and a location in a score table identified where an identifier of the user is to be inserted. The user is also assigned to one of a plurality of score groups, and a count of users associated with that score group is modified accordingly. A relative position of the user in the assigned score group is also associated with the user, and the relative positions of any other users assigned to that same score group and having a lower score than the user are also modified accordingly.

In accordance with certain other embodiments, a user identifier for which a ranking is to be retrieved is received, the ranking indicating how a rating associated with the identified user compares to other ratings associated with other users. Which of a plurality of rating groups the user identifier is assigned to is identified, and a leaf node of a tree is also identified, the leaf node corresponding to the rating group to which the user identifier is assigned. A path in the tree is traversed from the leaf node to a root node of the tree, summing selected user counts along the path. A relative position of the user identifier within the rating group to which the user identifier is assigned is identified, and a ranking is generated as the sum of the relative position and the summation of selected user counts along the path.

### BRIEF DESCRIPTION OF THE DRAWINGS

The same numbers are used throughout the document to reference like components and/or features.
Fig. 1 is a block diagram of an exemplary environment including a statistics system.
Fig. 2 illustrates an exemplary rating table.
Fig. 3 illustrates an exemplary group table.
Fig. 4 is a flowchart illustrating an exemplary process for adding entries to and deleting entries from a rating table.
Fig. 5 illustrates another exemplary rating table.
Fig. 6 illustrates another exemplary group table.
Fig. 7 illustrates yet another exemplary rating table.
Fig. 8 illustrates yet another exemplary group table.
Fig. 9 is a flowchart illustrating an exemplary process for splitting a group.
Fig. 10 illustrates still another exemplary rating table.
Fig. 11 illustrates still another exemplary group table.
Fig. 12 illustrates still one other exemplary group table.
Fig. 13 illustrates an exemplary memory tree.
Fig. 14 is a flowchart illustrating an exemplary process for incrementing and decrementing user counts for a memory tree.
Fig. 15 is a flowchart illustrating an exemplary process for retrieving a user ranking based on a memory tree.
Fig. 16 is a flowchart illustrating an exemplary process for retrieving a window of rankings.
Fig. 17 is a block diagram of an exemplary online gaming environment.
Fig. 18 illustrates a general computer environment which can be used to implement the techniques described herein.
Fig. 19 shows functional components of an exemplary game console in more detail.

### DETAILED DESCRIPTION

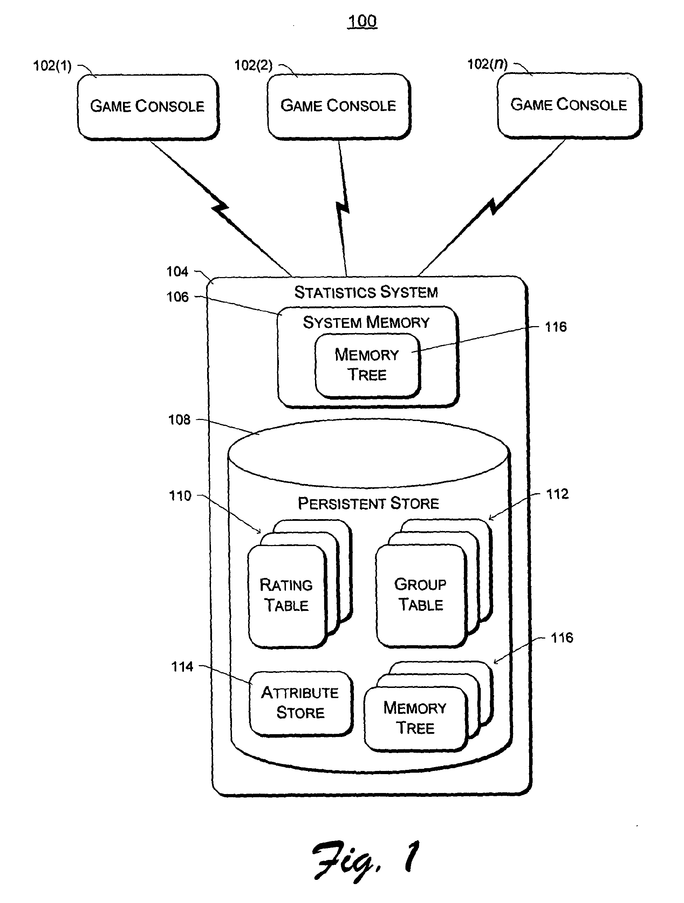

Fig. 1 is a block diagram of an exemplary environment 100. Multiple client devices 102(1), ..., 102(*n*) are coupled to a statistics system 104. The coupling between devices 102 and system 104 can be any of a variety of couplings allowing communication between system 104 and each of devices 102. In one implementation, the coupling includes the Internet, and may also optionally include one or more other networks (e.g., a local area network (LAN) or wide area network (WAN)).

Game console 102 may be a dedicated game console, or alternatively may include additional functionality. For example, the game console may include digital video recording functionality so that it can operate as a digital VCR, the game console may include channel tuning functionality so that it can tune and decode television signals (whether they be broadcast signals, cable signals, satellite signals, etc.), and so forth. Additionally, different types of game consoles 102 may use statistics system 104 concurrently. For example, both of two different game console platforms (e.g., dedicated game consoles manufactured by two different manufacturers) may send and receive ratings, attributes, and/or rankings for the same and/or different game titles.

Statistics system 104 includes a system memory 106 and a persistent store 108. Statistics system 104 may be implemented using a single server device or alternatively multiple server devices. If multiple server devices are used, the multiple devices operate together to provide the functionality of system 104. The workload of various server devices in system 104 can be divided amongst the various server devices in any of a wide variety of manners. For example, different portions of the rankings may be handled by different devices (e.g., approximately the top half handled by one device and approximately the bottom half handled by another device), rankings for different game titles or game title manufacturers may be handled by different devices, different attributes for the same game title may be handled by different devices, and so forth.

System 104 includes one or more rating tables 110, one or more group tables 112, an attribute store 114, and one or more memory trees 116. Memory trees 116 are maintained in system memory 106 (e.g., random access memory). A memory tree 116 can be rebuilt and loaded into system memory 106 as needed (e.g., when system 104 is booted) based on the contents of tables 110 and 112, as discussed in more detail below. Alternatively, a memory tree 116 (the structure of the tree 116 alone, or the structure of the tree 116 along with the data of the tree 116) may also be maintained in persistent store 108.

Additionally, tables 110 and 112, as well as attribute store 114, are illustrated as being maintained in persistent store 108. At various times, all or portions of tables 110 and 112, as well as attribute store 114, may also be contained in system memory 106. What portions of tables 110 or 112, or store 114, are included in system memory 106 at any given time can vary and depends on the amount of system memory available in system 104.

System 104 can persistently store tables 110 and 112 and attribute store 114 (and optionally memory tree 116) in any of a wide variety of manners. In one exemplary implementation, system 104 implements a SQL (Structured Query Language) database to store tables 110 and 112 and the attributes of attribute store 114 (and optionally memory tree 116). One or more SQL extended stored procedures may also optionally be used in storing data for tables 110 and 112 and the attributes of attribute store 114 (and optionally memory tree 116).

During operation, game console(s) 102 generate ratings based on different attributes of the game being played by the user(s) of the game console(s). The exact manner in which these ratings are generated, as well as what the ratings represent, can vary by game title and the game designer's desires. The ratings generated for users are used to generate rankings for the players. These rankings, together, are also referred to as a leader board. A leader board can have rankings for many players spread throughout the world, and can include, for example, up to hundreds of thousands or millions or more user rankings.

Different attributes can be used to generate a rating. The attributes to be used to generate a particular rating are defined by the game designer or manufacturer. Examples of such attributes include: a number of games won, a number of games lost, a number of games tied, a total number of points obtained in a game, how quickly certain activities are performed, how much help the user received in completing a task, how many items or objects the user obtained in a period of time, how many minutes the user has spent playing the game, and so forth. Attributes can be combined in any manner desired by the game designer or manufacturer, and the manner in which they are to be combined is defined by the game designer or manufacturer (typically, such combination is performed by the game titles while executing).

Each game title may have one or more ratings. The meaning of each rating can thus vary. For example, a particular game title may have one rating that is only the user's score, another rating that is only the user's fastest time, and another rating that is a combination of two or more of the attributes above.

In one implementation, a different leader board is maintained for each rating handled by system 104 for a game title. Statistics system 104 maintains a rating table 110, a group table 112, and a memory tree 116 for each leader board.

Additionally, in one implementation statistics system 104 imposes a limit on the number of different ratings that it will handle per game title. An exemplary range for such a limit is 15-20, but higher limits may also be used.

Statistics system 104 allows game consoles 102 to send data to system 104 for storage, to retrieve data stored by system 104, and to retrieve rankings from system 104. A game console can send both ratings for a particular user to system 104 as well as the attribute values that were used to generate those ratings. Statistics system 104 need not be concerned with the manner in which ratings are generated. However, statistics system 104 does operate as a storage device for game consoles 102 and does store the values of the individual attributes received from the game consoles in attribute store 114. These attribute values are stored by user identifier, allowing the game consoles to subsequently retrieve information about the users. For example, a game console 102 that is to recalculate a user's rating in light of recent gameplay can retrieve the previous attributes stored by system 104 and use those attributes in calculating the user's new rating.

During operation, when statistics system 104 receives a rating for a user, system 104 identifies which game title the rating corresponds to as well as which leader board of the game title the rating corresponds to. Given the leader board, statistics system 104 accesses the appropriate rating table 110. System 104 maintains a different rating table 110 for each leader board of each game title supported by system 104. The rating table for a particular leader board identifies the user identifiers of users that have a rating included in the table, the user's rating, a group (also referred to herein as a bucket) that the user is assigned to, and a relative position of the user in that group. In one exemplary implementation, system 104 allows each rating table to maintain, for each user identifier, only one rating, one group, and one relative position. In alternate implementations, multiple such ratings, groups, and relative positions may be maintained for each user identifier.

The user identifier and the rating are both received by system 104 from the game console 102. System 104 assigns the user identifier (and thus also assigns the user) to a particular group based on the received rating. The particular group that a user identifier is assigned to can change over time, such as due to changes in the user's rating or the splitting of groups, as discussed in more detail below.

The relative position of the user is generated by system 104. The relative position refers to the user's rank relative to the other users that are assigned to the same bucket as the user. The relative position is generated by ranking the various users, based on their ratings, within the particular group.

System 104 also maintains, for each leader board, a rating group table 112. Group table 112 identifies the different groups or buckets that user identifiers may be assigned to, a range of ratings that each group corresponds to, a count of how many user identifiers are currently assigned to each group, and a value (also referred to as a "full index" or a "group full index") that indicates whether a threshold number of user identifiers are assigned to the group. The value of this threshold number of user identifiers can be determined in a variety of different manners, such as empirically based on system performance, based on observing game title behavior, and so forth. In one exemplary implementation, the value of this threshold number is on the order of 60-80, although other values may alternatively be used.

Alternatively, the count of how many user identifiers are currently assigned to each group need not be maintained in group table 112. This count may be maintained, in place of the count in group table 112 or in addition to the count in group table 112, in the memory tree 116 for the leader board.

Although group tables 112 and rating tables 110 are each described herein as a single table per leader board, alternatively a rating table for a particular leader board may be separated into multiple tables, and a group table for a particular leader board may also be separated into multiple tables.

Fig. 2 illustrates an exemplary rating table 150, and Fig. 3 illustrates an exemplary group table 160. As illustrated, rating table 150 maintains information for each user identifier, including a group identifier, a rating, and a relative position. The group identifiers in rating table 150 identify groups in table 160 of Fig. 3. Group table 160 maintains information for each grouping, including the range of ratings the groups correspond to (illustrated as lo and high values), a count of how many user identifiers are currently assigned to each group, and a full index. Alternatively, the count(s) of how many user identifiers are currently assigned to each group may be maintained in a memory tree corresponding to the tables 150 and 160 rather than in table 160.

As an example, looking at tables 150 and 160 of Figs. 2 and 3, respectively, group 2 corresponds to ratings ranging from 80 to 89, and currently has three user identifiers assigned to it (user identifiers 12, 67, and 57, seen in table 150). For those user identifiers assigned to group 2, user identifier 12 has the highest rating (89) and thus has a relative position of 1, user identifier 67 has the second highest rating (87) and thus has a relative position of 2, and user identifier 57 has the third highest ranking (81) and thus has a relative position of 3.

Returning to Fig. 1, system 104 can add and delete ratings to rating tables 110. A new rating is added to table 110 the first time a rating for a particular user is submitted to system 104 for a particular leader board. A user may also optionally be allowed to delete himself or herself from the leader board, resulting in deletion of the user's information from the corresponding rating table 110. Additionally, when a user has a new rating (e.g., continued game play by the user has resulted in the game title generating a new rating, which may be higher or lower (or even the same) as his or her previous rating), the user's previous rating is deleted from rating table 110 and his or her new rating is added to rating table 110. Alternatively, if the user's new rating is the same as his or her previous rating, then no such addition and deletion need occur.

Fig. 4 is a flowchart illustrating an exemplary process 200 for adding entries to and deleting entries from rating table 110. The process of Fig. 4 is implemented by statistics system 104, and may be performed in software, firmware, hardware, or combinations thereof. The process of Fig. 4 is discussed with reference to components of Fig. 1.

Initially, a request to add or delete a rating table entry is received (act 202). An add or delete request may be issued explicitly by a game console 102, or alternatively implicitly (e.g., by issuance of a request to update or modify the user's rating, which is converted to a delete request for the previous entry and an add request for the new entry by system 104). If the request is an add request, then the location at which to add the user in the rating table 110 is identified (act 204). The user is assigned a group (act 206), based on the user's rating. The count of the group the user is assigned to is incremented by one (act 208) in the group table 112 and/or memory tree 116, and the user is assigned a relative position in the user's group (act 210). The relative position of every other user that is assigned to the same group as the user and that also has a lower rating than the user is incremented (act 212).

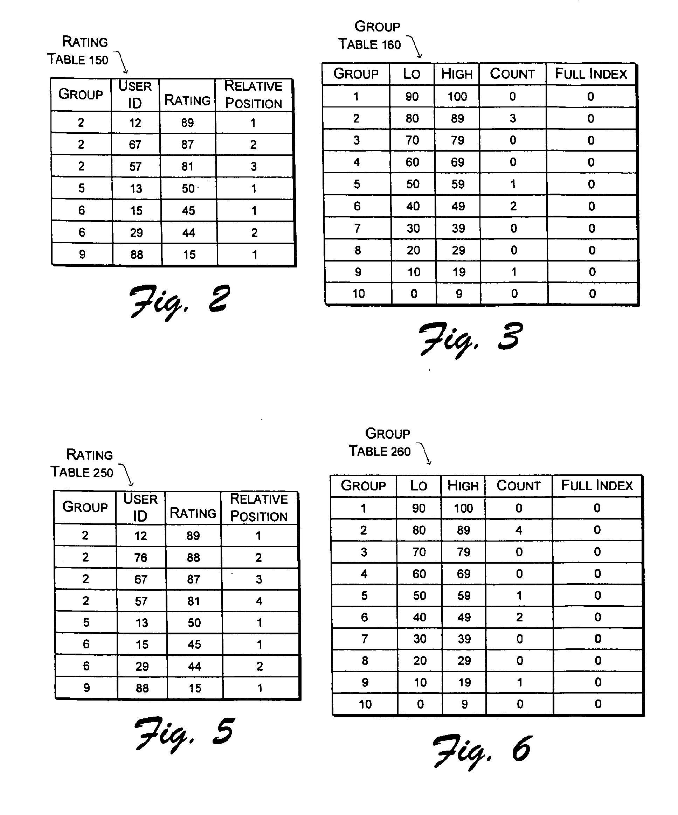

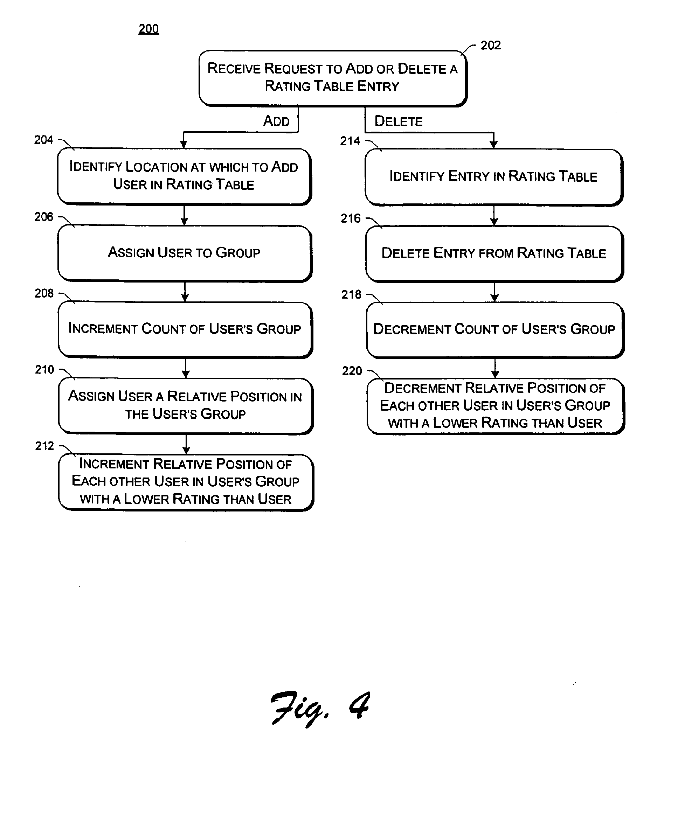

An example of adding a rating table entry can be seen with reference to Figs. 2, 3, 5, and 6. Assume that a new user (with a user identifier 76) having a rating of 88 is added to the leader board corresponding to rating table 150 of Fig. 2. Fig. 5 illustrates a rating table 250, which is similar to rating table 150 of Fig. 2 except that an entry for user identifier 76 has been added. User identifier 76 has a rating of 88, and thus is assigned to bucket 2 (as seen from Fig. 3, bucket 2 has a rating range of 80-89). The user identifier (76), bucket identifier (2), and rating (88) are added to table 250 of Fig. 5. The user with user identifier 76 now has the second highest score of users assigned to bucket 2, and thus is assigned the relative position of 2. The other users assigned to bucket 2 having ratings lower than the rating of user identifier 76 (that is, user identifiers 67 and 57) each have their relative positions incremented. So, as seen in Fig. 5, user id 67 now has a relative position of 3, and user id 67 now has a relative position of 4. Additionally, as one more user is now assigned to group 2, the count of group 2 is incremented to 4, as seen in table 260 of Fig. 6 (additionally, or alternatively, the count(s) in the memory tree for the leader board is incremented).

In the illustrated example, the rating tables are sorted based on rating. Thus, the location at which to add a new entry into the table is dependent on the rating of the new entry. By sorting the rating table by rating, the relative positions of other users in the same bucket can be quickly identified and incremented as needed in response to the new entry. Alternatively, the rating table may be sorted based on other fields (e.g., user identifier or bucket).

In one implementation, the manner in which the tables are stored is up to a database service (e.g., a SQL database). The database service is configured to keep groups of ratings together in a way that is efficient to access or retrieve an entire group of ratings (using a clustered index on the group field), and to provide fast retrieval of a rating given the user identifier (using a regular index). When an entry is to be added to (or deleted from) a table, the data for and/or identifier of the entry is passed to the database service, which in turn handles the particular insertion or deletion.

System 104 is also configured to handle "ties" (that is, situations where multiple users have the same rating). In an exemplary implementation, when system 104 receives an add request for a user rating that is the same as a rating of another user already stored in the rating table, the new user entry is added below the other entry(ies) having the same rating and is assigned a relative position greater than the previous entry(ies). Thus, in essence, it can be said that "ties go to the first in line". Alternatively, other tie-handling policies may be implemented (e.g., based on the user's identifier, the time or date the user purchased his or her game console, alphabetical by user name associated with the user identifier, and so on).

Returning to act 202 of Fig. 4, if the received request is a delete request then the entry in the appropriate rating table to be deleted is identified (act 214). The entry is deleted from the rating table (act 216), and the count of the group in the group table 112 and/or the memory tree 116 to which the user was assigned is decremented by one (act 218). The relative position of every other user that is assigned to the same group as the user was assigned to and that also had a lower rating than the user had is decremented (act 220).

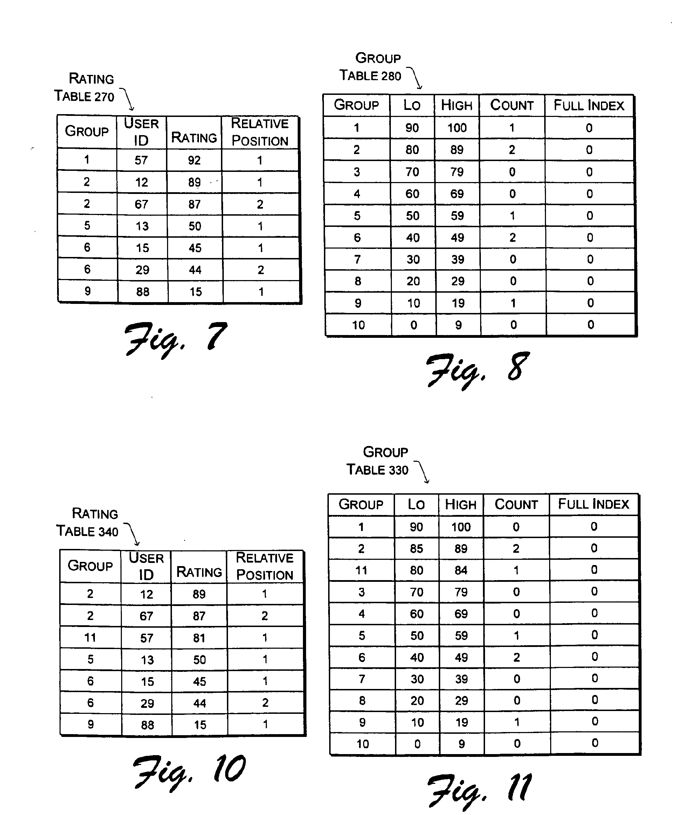

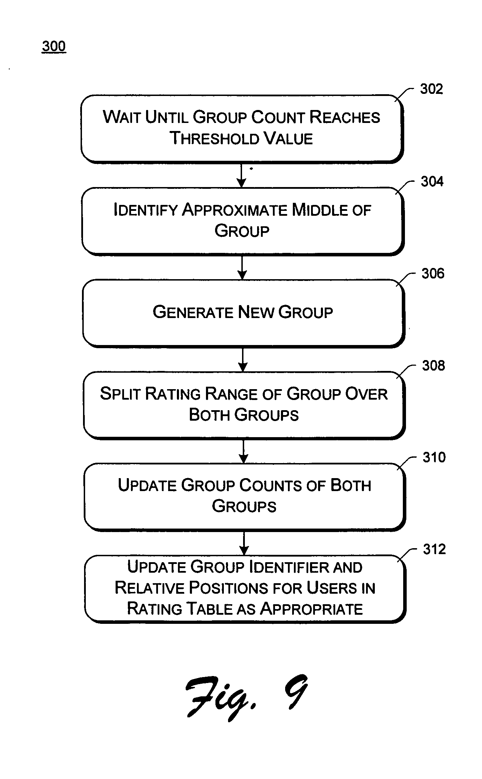

An example of adding and deleting table entries can be seen with reference to Figs. 2, 3, 7, and 8. Assume that a game console has submitted a new rating for a user (user identifier 57). The user's previous rating was 81, and the new rating is 92. The user's previous entry in rating table 150 is deleted, and a new entry is added (this can occur in different orders - the previous entry may be deleted and then the new entry added, or the new entry may be added and then the previous entry deleted, or the two may occur substantially concurrently). After the addition and deletion have occurred, Fig. 7 illustrates a rating table 270 reflecting the new rating for the user. As can be seen in Fig. 7, group 2 now has only two users assigned to it, and the relative position of user identifier 67 has been decremented from 3 to 2. A new entry has been added for user identifier 57, indicating the new rating as well as the new group (group 1) to which the user is now assigned. Being the only user assigned to group 1, the relative position for user identifier 57 is 1. Additionally, as can be seen in Fig. 8, grouping table 160 of Fig. 3 has been changed to grouping table 280 of Fig. 8, with the count of group 1 being incremented from 0 to 1, and the count of group 2 being decremented from 3 to 2 (additionally, or alternatively, the count(s) in the memory tree for the leader board is incremented).

It should be noted that, due at least in part to the multiple groups, system 104 reduces the amount of physical writes to insert/delete a rating. Adding/deleting a rating will affect half of a group on average and the entire group in the worst case, but this affected amount is still small compared to the total size of the leader board.

Returning to Fig. 1, when a group has too many users assigned to it (e.g., the count of the group reaches a threshold value), the group is split into multiple groups. Fig. 9 is a flowchart illustrating an exemplary process 300 for splitting a group. The process of Fig. 9 is implemented by statistics system 104, and may be performed in software, firmware, hardware, or combinations thereof. The process of Fig. 9 is discussed with reference to components of Fig. 1.

System 104 waits until the group count reaches a threshold value (act 302). It is to be appreciated that system 104 can be performing other tasks and operations while waiting. Once the count for a group reaches the threshold value, an approximate middle of the group is identified (act 304). This middle can be determined in different manners, such as based on the number of users assigned to the group or on the rating range corresponding to the group. For example, the rating range may simply be cut approximately in half (e.g., if the range was 80-89, the approximate middle would be 84 or 85). By way of another example, the number of users may be cut approximately in half (e.g., if the count of the group was 70 and the rating range of the group was 80-89, and if 34 of the users assigned to the group had ratings of 80 or 81, and if the other 36 users assigned to the group had ratings in the range of 82-89, then the approximate middle would be 81 or 82).

A new group is then generated (act 306), and the rating range corresponding to the group is split between the group and the new group (act 308). An entry for the new group is added into the group table at the appropriate location, based on the rating range of the new group. In the exemplary implementation, the group table is sorted based on rating range (as illustrated), although other fields may alternatively be used as a basis for sorting.

The manner in which the rating range is split can vary (e.g., based on how the approximate middle of the group is identified, as discussed above with reference to act 304). The group counts of both of these groups in the group table and/or the memory tree is then updated (act 310), and the group identifier and relative positions for users in the groups are updated as appropriate (act 312).

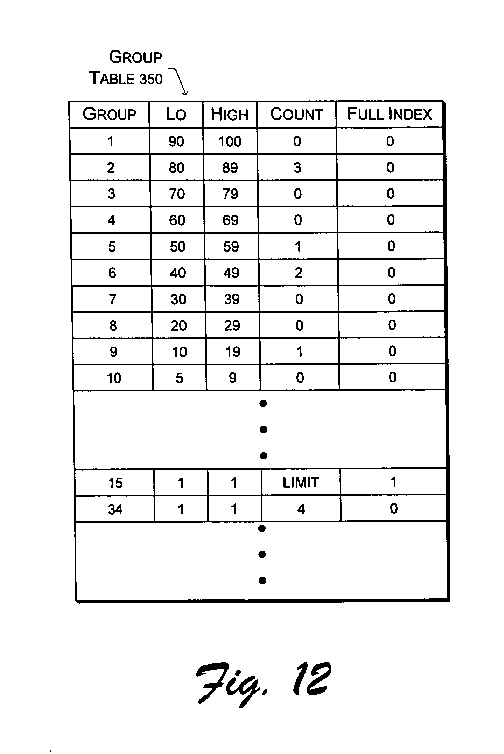

An example of splitting a group can be seen with reference to Figs. 10 and 11. Assume that the count threshold is 3 (typically too small a number, but useful for explanation purposes). Group 2, having a count of 3 (see, table 160 of Fig. 3) has reached its threshold and is to be split. The approximate middle is determined to be 84 or 85, so a new group (group 11) is generated having a rating range of 80 to 84, and the rating range of group 2 is changed to be 85-59. The count of each of the groups (2 and 11) is updated appropriately in the group table 330 of Fig. 11. Additionally, in rating table 340 of Fig. 10, user identifier 57 is now assigned to group 11, so the group identifier and relative position for user identifier 57 in table 340 are modified accordingly.

In one exemplary implementation, when a group is split, the group being split remains and one new group is created. Alternatively, the group being split may be removed and two new groups may be created.

In another exemplary implementation, when a group is split, the group being split remains and has assigned to it the users having the highest ratings of the group. A new group is created and the users having the lowest ratings are assigned to the new group. By splitting the users amongst the two groups in this manner, the number of relative positions that need to be updated in the rating table are reduced.

In process 300 of Fig. 9, and elsewhere herein, reference is made to splitting of a group into two groups. Alternatively, this splitting can be x-way splitting where x is any value greater than or equal to 2. For example, rather than splitting a group into two groups, a group may be split into three groups, four groups, five groups, and so forth.

It should be noted that, analogous to splitting groups, groups may also be combined. For example, two groups having consecutive rating ranges may be combined into a single group if their associated counts are low enough. By way of another example, a group that becomes empty may be deleted and the rating range of another group (having an adjacent rating range) modified to encompass the rating range of the deleted group.

Returning to Fig. 1, situations can arise in system 104 where group splitting results in a group having a range of one value (e.g., the lo and high values are the same), and the threshold count value for the group has been reached. In such situations, an additional group is generated having the same range, and the previous group having that range has its full index value set (e.g., change from 0 to 1).

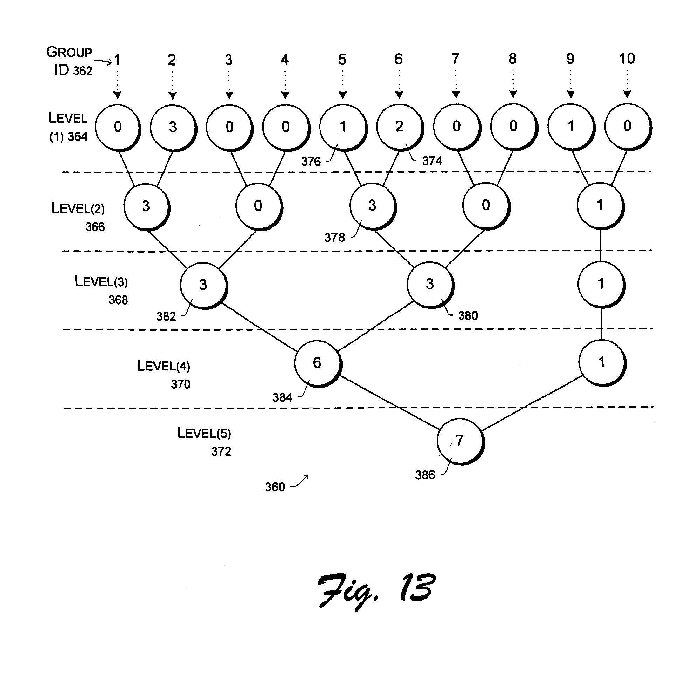

An example of this situation is illustrated in Fig. 12. A group table 350 is illustrated, with group identifier 15 having a rating range of 1-1, and a count of users assigned to it at the threshold value (limit). A new group (group identifier 34) has been added, also having a rating range of 1-1. The full index for group identifier 15 is set (e.g., a value of 1 as illustrated) to indicate it has reached its limit, and the full index for group identifier 34 is not set (e.g., a value of 0 as illustrated), indicating any new entries having a rating of 1 are to be added to the new group (34), not the previous group (15).

When an entry for a user is being added to or deleted from a rating table, the group that the user is assigned to is temporarily locked for the duration of the addition or deletion process. The temporary lock on the group prevents system 104 from making any other additions to or deletions from that group until the lock is released. Thus, for example, while system 104 is adding a new entry to group 2, no other entry can be added to or deleted from group 2 until the new entry has been added (at which point the lock is released). It should be noted, however, that other groups are not locked. Thus, even though group 2 may be locked, that lock does not prevent system 104 from adding an entry to or deleting an entry from group 5.

Additionally, the use of group and rating tables, as well as memory tree 116, allows rank information to be readily retrieved by system 104. For example, a game console can request the rank for a particular user (e.g., by user identifier), and system 104 can readily return the requested rank to the game console. In order to determine the rank of a particular user, memory tree 116 is employed. When system 104 is booted, memory tree 116 is copied into system memory 106 and populated as discussed below. By saving memory tree 116 in persistent store 108, the entire tree does not have to be regenerated every time system 104 is rebooted. Alternatively, the memory tree 116 may not be saved in persistent store 108, but be rebuilt when system 104 is booted (given the number of groups and the number of ratings contained in each group, which are saved in persistent store 108). In one exemplary implementation memory tree 116 is a binary tree, although different types of trees may alternatively be used in different implementations.

Memory tree 116 has, at its lowest level, multiple leaf nodes. Each leaf node corresponds to a particular group and has associated with it the count of users assigned to that group. The leaf nodes are laid out, from left to right, in the same order as the corresponding groups occur in the group table (with the left-most leaf node corresponding to the group having the highest rating range). Each leaf node has a parent node, and the parent node has associated with it the sum of the count(s) of each of its children nodes. This parent/child relationship continues up the tree until a level is reached having a single node (the root node of the tree).

Fig. 13 illustrates an exemplary memory tree 360. Memory tree 360 corresponds to the ten groups identified in group table 160 of Fig. 3. A row of group identifiers 362 are shown to illustrate the relationship between the leaf nodes (in level(1) 364) and the groups. Each leaf node in level(1) 364 has associated with it the count of users assigned to the corresponding group. The nodes in level(2) 366 are parent nodes to the leaf nodes, and have associated with them the sums of the counts of their children nodes. Similarly, the nodes in level(3) 368 are parent nodes to the nodes in level(2) 366, and the nodes in level(4) 370 are parent nodes to the nodes in level(3) 368. The root node in level(5) 372 is the parent node to the nodes in level(4) 370.

In one exemplary implementation, the count values associated with the nodes in the memory tree are not stored in persistent store 108 of Fig. 1, although the structure of the memory tree (the parent/child relationship of the various nodes) is stored in persistent store 108. Alternatively, the count values associated with the nodes in the memory tree may also be stored in persistent store 108.

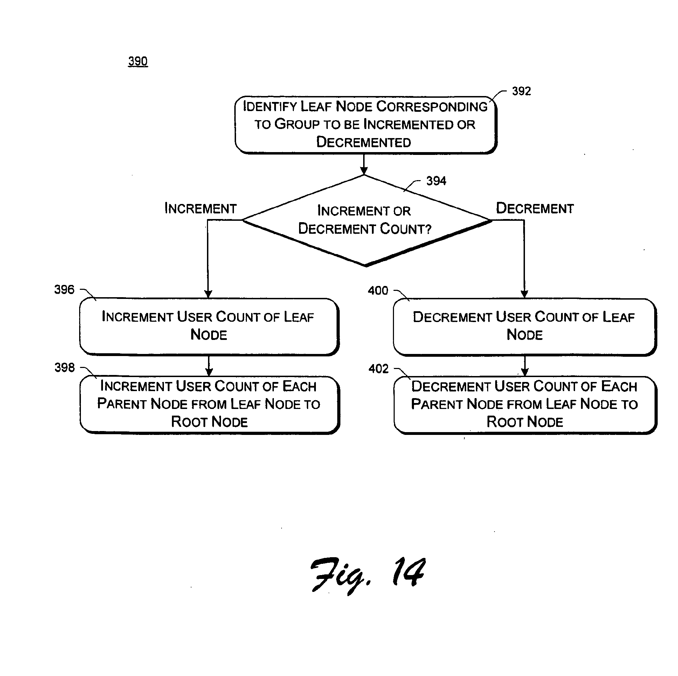

Fig. 14 is a flowchart illustrating an exemplary process 390 for incrementing and decrementing user counts for a memory tree. The process of Fig. 14 is implemented by statistics system 104 of Fig. 1, and may be performed in software, firmware, hardware, or combinations thereof. Fig. 14 is discussed with additional reference to Fig. 13.

Initially, the memory tree leaf node corresponding to the group that is to have its user count incremented or decremented is identified (act 392). Process 390 then proceeds based on whether the count for a group is to be incremented or decremented (act 394). If the count is to be incremented, then the user count of the leaf node is incremented (act 396), and the user count of each parent node along the path from the leaf node to the root node of the tree is also incremented (act 398). However, if the count is to be decremented, then the user count of the leaf node is decremented (act 400), and the user count of each parent node along the path from the leaf node to the root node of the tree is also decremented (act 402).

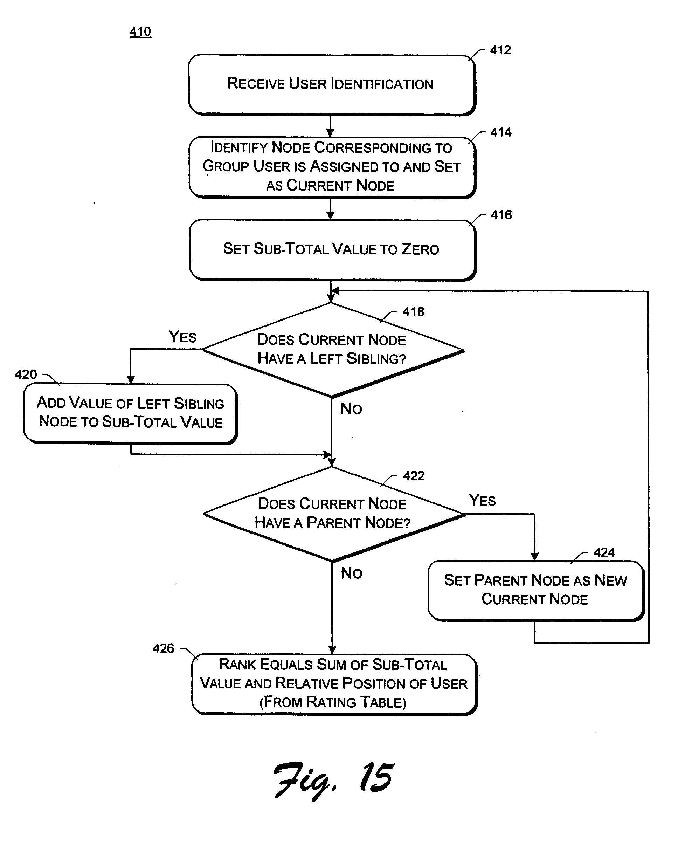

Fig. 15 is a flowchart illustrating an exemplary process 410 for retrieving a user ranking based on a memory tree. The process of Fig. 15 is implemented by statistics system 104 of Fig. 1, and may be performed in software, firmware, hardware, or combinations thereof. Fig. 15 is discussed with additional reference to Fig. 13.

Initially, a user identifier the rank of which is desired is received (act 412). The node corresponding to the group that the identified user is assigned to is identified and set as the current node (act 414). A sub-total value is set to zero (act 416) and a check is made as to whether the current node has a left sibling (act 418). A node has a left sibling if it has a parent node that has another child node located to the left of the node. For example, in Fig. 13, leaf node 374 has a left sibling (node 376 - the other child of parent node 378), but leaf node 376 does not have a left sibling.

If the current node has a left sibling, then the value associated with the left sibling node is added to the sub-total value (act 420). However, if the current node does not have a left sibling, or after the value of the left sibling node is added to the sub-total value, a check is made as to whether the current node has a parent node (act 422). If the current node has a parent node, then the parent node is set as the current node (act 424) and the process returns to act 418. However, if the current node does not have a parent node then the process has reached the root node, and the rank for the user is set equal to the sum of the sub-total value generated by the process and the relative position of the user obtained from the rating table (act 426).

An example of the process of Fig. 15 can be seen with reference to memory tree 360 of Fig. 13 and table 150 of Fig. 2. Assume that a request for the ranking of the user with user id 29 is received. The user is assigned to bucket 6 (seen in table 150), which corresponds to node 374 of Fig. 13. Node 374 has a left sibling (node 376), so the value (1) of the left sibling (node 376) is added to the sub-total value, which is now 1. Node 374 has a parent, node 378, which does not have a left sibling. Node 378 also has a parent, node 380, which does have a left sibling (node 382). So, the value (3) of the left sibling (node 382) is added to the sub-total value, which is now 4. Node 380 has a parent, node 384, which does not have a left sibling. Node 384 also has a parent, node 386, which does not have a parent and thus is the root node. The sub-total value (4) is added to the relative position of the user (which is 2, seen in table 150), resulting in a rank of 6 for the user.

It should be noted that the process of Fig. 15 is an exemplary process, and can change based on the structure of the memory tree. For example, the memory tree could alternatively be structured with the right-most leaf node corresponding to the group having the highest rating range, in which case the process of Fig. 15 would reference right siblings (in acts 418 and 420) rather than left siblings.

Additionally, in one exemplary implementation, the memory tree is implemented as a uniform-depth tree: the path from the root node to any leaf node is the same length. This allows the use of data structures (e.g., the well-known heap data structure) that take advantage of this uniform-depth property and can result in faster retrieval of information from the memory tree. However, in order to retain the uniform-depth property, the memory tree structure is regenerated (and saved to persistent store 108 of Fig. 1) each time a group is split. In alternate implementations, other data structures are used and the memory tree is not uniform-depth. In these alternate implementations different parts of the tree can grow to different depths, and the memory tree does not need to be regenerated when a group is split.

The use of the memory tree and the assigning of users to particular groups allows rankings of particular users to be readily determined. This is true for a wide variety of user ranking requests received from different game consoles. For example, a user may be interested in seeing the top ten or top hundred users and their ratings for a particular leader board. Such a request can be readily answered by system 104 by obtaining the top ten or top hundred users and ratings from the rating table for the leader board.

By way of another example, a user may be interested in seeing how he or she ranks as well as a group of his or her friends rank. A list of such friends may be maintained on the user's game console, and/or remotely by a service accessible to the user's game console (e.g., a presence and notification system). Such a list of friends would include the user identifier of each such friend. A list of user identifiers can be communicated to system 104, which in turn retrieves the ranks for the user and each of his or her friends, and returns the ranks to the user's game console for display to the user. By way of yet another example, if the user were interested in seeing how he or she ranks relative to his or her friends, the list of user identifiers could be sent to system 104 and rankings obtained, or alternatively only ratings may be obtained. The system 104 (or alternatively the game console) can then rank the friends relative to one another based on the obtained rankings or ratings.

Additionally, a user may be interested in retrieving a window of rankings. This window could be the top *y* rankings or the bottom *y* rankings (with *y* being virtually any number), or alternatively may be located around a particular user identifier (e.g., the user's identifier, a user identifier of one of the user's friend, the user identifier of another user that is asking the user to play a game, etc.).

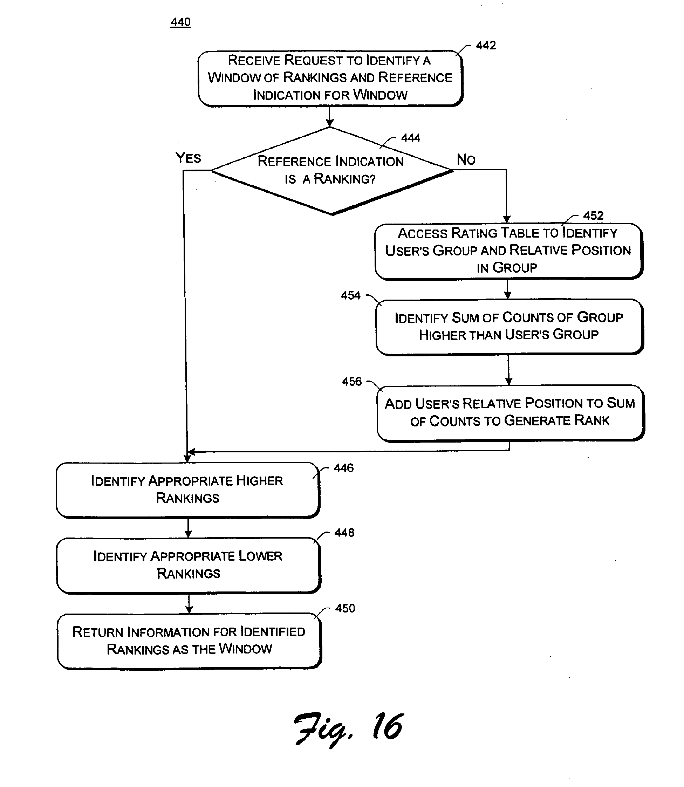

Fig. 16 is a flowchart illustrating an exemplary process 440 for retrieving a window of rankings. The process of Fig. 16 is implemented by statistics system 104 of Fig. 1, and may be performed in software, firmware, hardware, or combinations thereof.

Initially, a request to identify a window of rankings is received (act 442), along with a reference indication for the window. The reference indication can be, for example, a particular ranking or a user identifier. Process 440 proceeds based on whether the reference indication is a ranking (act 444). If the reference indication is a ranking, then the appropriate higher rankings can be identified (act 446) and the appropriate lower rankings can be identified (act 448). The appropriate higher and lower rankings refer to the size of the window to be retrieved - how many rankings have been requested. The request received in act 442 includes an indication of the size of the window (e.g., by a total number of requested rankings, a number of higher rankings and a number of lower rankings, etc.). For example, if the window is to be ten rankings, then the appropriate higher rankings may be the five rankings immediately higher on the leader board than the reference indication, and the appropriate lower rankings may be the four rankings immediately lower on the leader board than the reference indication. The immediately lower and higher rankings on the leader board can be readily determined from rating table 150. The identified rankings are then returned to the requesting game console as the requested window (act 450).

Returning to act 444, if the reference indication is not a ranking (e.g., it is a user identifier), then the rating table is accessed to identify the group the referenced user is assigned to and his or her relative position in the group (act 452). A sum of counts of groups higher than the user's group is identified (act 454), and the user's relative position (from the rating table) is added to the sum of counts to generate the rank (act 456). Acts 454 may be performed, for example, by using the process 410 of Fig. 15. Based on the generated ranking in act 456, the appropriate higher and lower rankings are identified (acts 446 and 448), and the identified rankings returned to the requestor as the window (act 450).

Returning to Fig. 1, communication between game consoles 102 and statistics system 104 can be performed in accordance with any of a wide variety of protocols. In one exemplary implementation, a set of Application Programming Interfaces (APIs) are exposed to game consoles 102 by statistics system 104 to allow requests to be submitted to system 104. Tables I-VI below show an exemplary set of APIs, including an XOnlineStatSet interface, an XOnlineStatGet interface, an XOnlineStatLeaderEnumerate interface, an XOnlineStatLeaderEnumerateGetResults interface, and an XOnlineStatReset interface.

Table I shows example structs and constants used by the APIs.

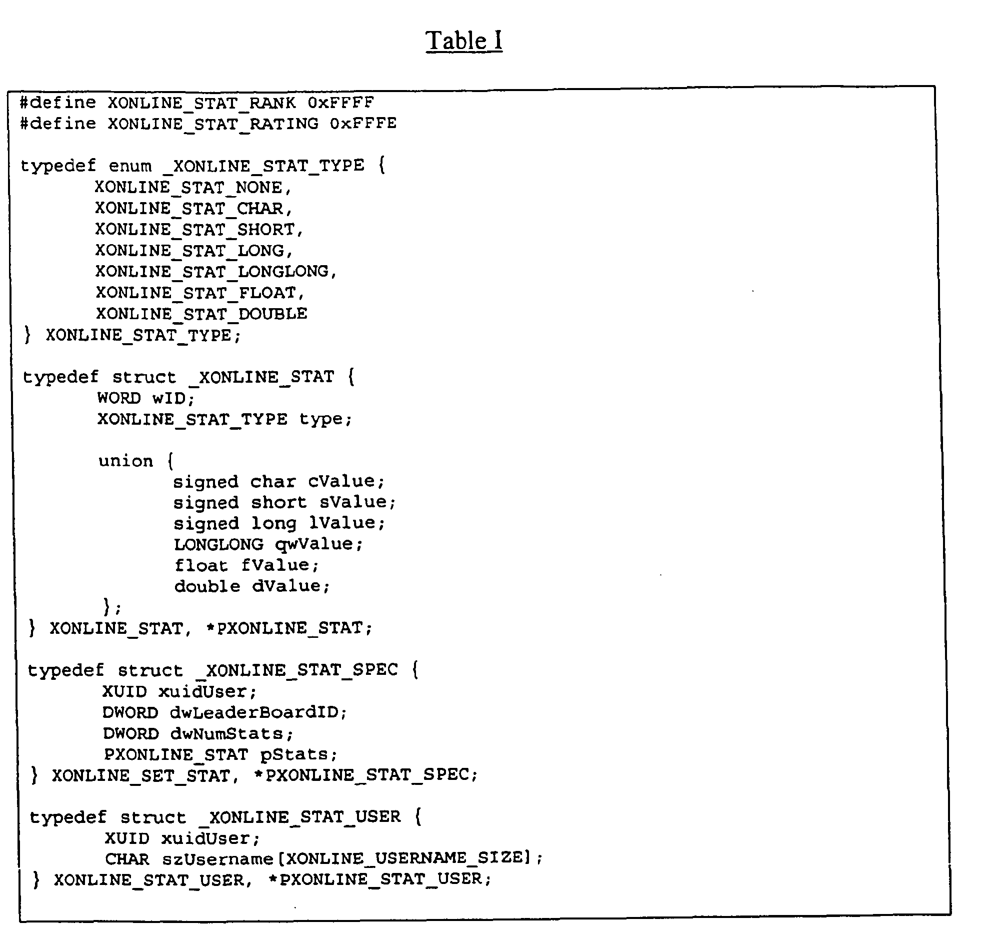

Table II shows the XOnlineStatSet interface, which is used by a game console 102 to set one or more attributes and/or ratings for one or more users.

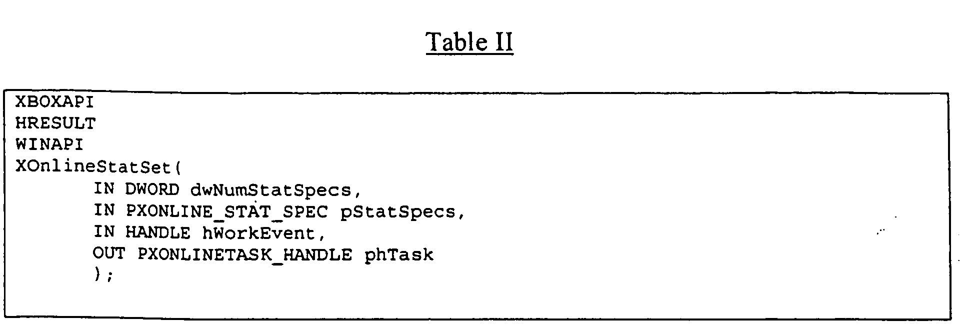

In the XOnlineStatSet interface, the *dwNumStatSpecs* parameter contains the number of elements of the array pointed to by *pStatSpecs.* The *pStatSpecs* parameter points to an array of XONLINE_STAT_SPEC that contains the new attributes and ratings. The *hWorkEvent* parameter is a Windows NT® operating system event handle that will be used to signalize that the task returned in *phTask* is ready to do more work. The *phTask* parameter is a pointer to a variable that will receive the task handle for this operation.

The XOnlineStatSet function returns a value of S_OK if the operation succeeded and *phTask* points to a valid task. If the operation fails, the function returns a flavor of an HRESULT error.

Table III shows the XOnlineStatGet interface, which is used by a game console 102 to retrieve one or more attributes, ratings, and/or ranks of one or more users.

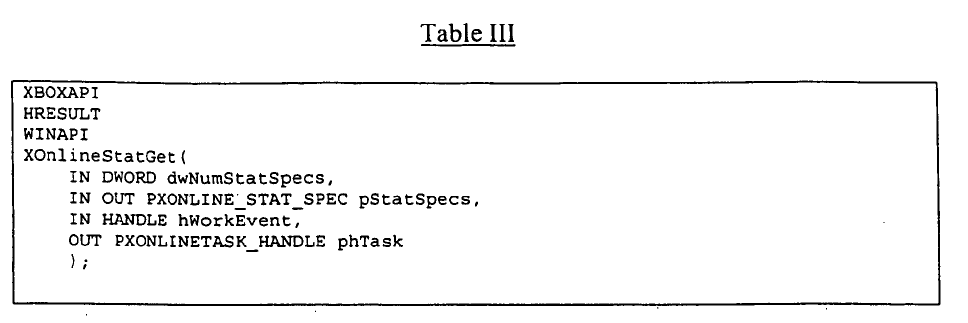

In the XOnlineStatGet interface, the *dwNumStatSpecs* parameter contains the number of elements of the array pointed to by *pStatSpecs.* The *pStatSpecs* parameter points to an array of XONLINE_STAT_SPEC that will receive the requested data. The value portion of the XONLINE_STAT_SPEC structures contain only the IDs of the requested data. The *hWorkEvent* parameter is a Windows NT® operating system event handle that will be used to signalize that the task returned in *phTask* is ready to do more work. The *phTask* parameter is a pointer to a variable that will receive the task handle for this operation.

The XOnlineStatGet function returns a value of S_OK if the operation succeeded and *phTask* points to a valid task. If the operation fails, the function returns a flavor of an HRESULT error.

Table IV shows the XOnlineStatLeaderEnumerate interface, which is used by a game console 102 to retrieve a page of users plus attributes, ratings, and/or ranks from a leader board.

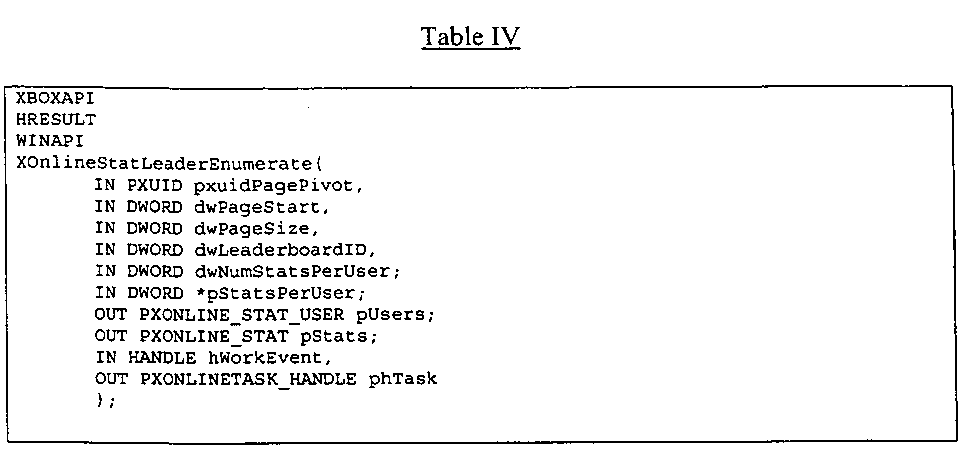

The parameters of the XOnlineStatLeaderEnumerate interface, are as follows:
*pxuidPagePivot -* if this parameter is not NULL, it points to a user that will be used as the pivot of the page. The statistics server will try to retrieve a page with a window of rankings where the user is right at the center.
*dwPageStart -* starting rank. Zero is the beginning of the leader board and the XOnlineStatLeaderEnumerate function will return "dwPageSize" entries. The *dwPageStart* parameter is ignored if pxuidPagePivot is not NULL.
*dwPageSize -* desired number of entries in the page.
*dwNumStatsPerUser -* Number of statistics stored in the array pointed to by pStatsPerUser.
*pStatsPerUser -* Array of title specific statistic IDs of attributes that should be retrieved for each user in the page.
*pUsers -* array that will receive the user information. Should have space to store at least dwPageSize users.
pStats - array that will receive the users' data requested in pStatsPerUser. Should have enough space to store at least dwNumStatsPerUser * dwPageSize entries.
*hWorkEvent -* a Windows NT® operating system event handle that will be used to signalize that the task returned in phTask is ready to do more work.
*phTask -* pointer to a variable that will receive the task handle for this operation.

The XOnlineStatLeaderEnumerate function returns a value of S_OK if the operation succeeded and *phTask* points to a valid task. If the operation fails, the function returns a flavor of an HRESULT error.

Table V shows the XOnlineStatLeaderEnumerateGetResults interface, which is used by a game console 102 to retrieve the number of entries retrieved by the task returned by XOnlineStatLeaderEnumerate.

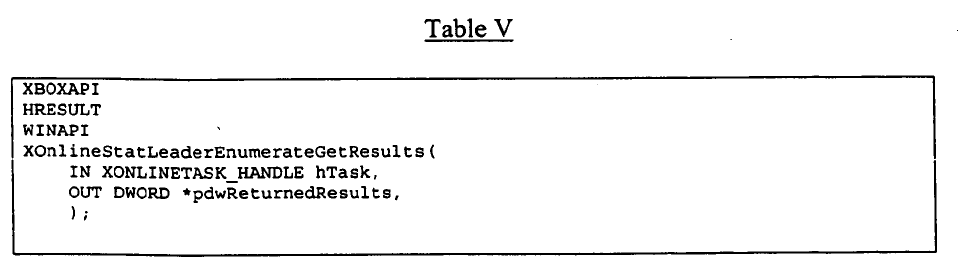

In the XOnlineStatLeaderEnumerateGetResults interface, the *hTask* parameter is the task returned by XOnlineStatLeaderEnumerate, and the *pdwReturnedResults* parameter is a pointer to a variable to receive the number of entries actually retrieved by the task.

The XOnlineStatLeaderEnumerateGetResults function returns a value of S_OK if the operation succeeded, or a flavor of an HRESULT error if the operation failed.

Table VI shows the XOnlineStatReset interface, which is used by game console 102 to reset all the data of a user with respect to a particular game title (including all attributes, ratings, and ranks of all leader boards maintained for that titter.

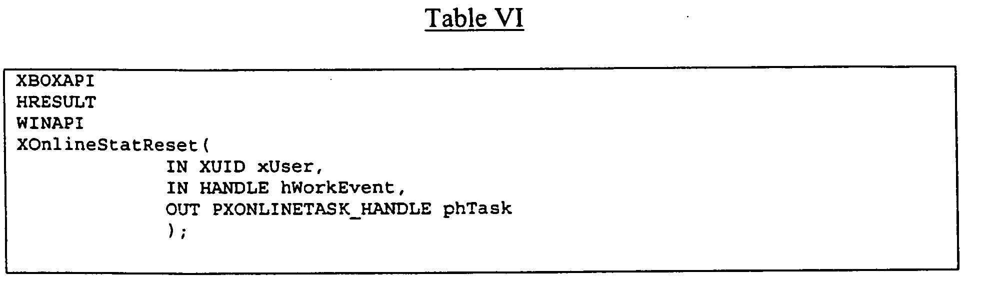

In the XOnlineStatReset interface, the *xUser* parameter is the identifier (XUID) of the user that will have its state reset. The statistics system may optionally impose the restriction that the user must be a logged in user. The *hWorkEvent* parameter is a Windows NT® operating system event handle that will be used to signalize that the task returned in phTask is ready to do more work. The *phTask* parameter is a pointer to a variable that will receive the task handle for this operation.

The XOnlineStatReset function returns a value of S_OK if the operation succeeded and *phTask* points to a valid task. If the operation fails, the function returns a flavor of an HRESULT error.

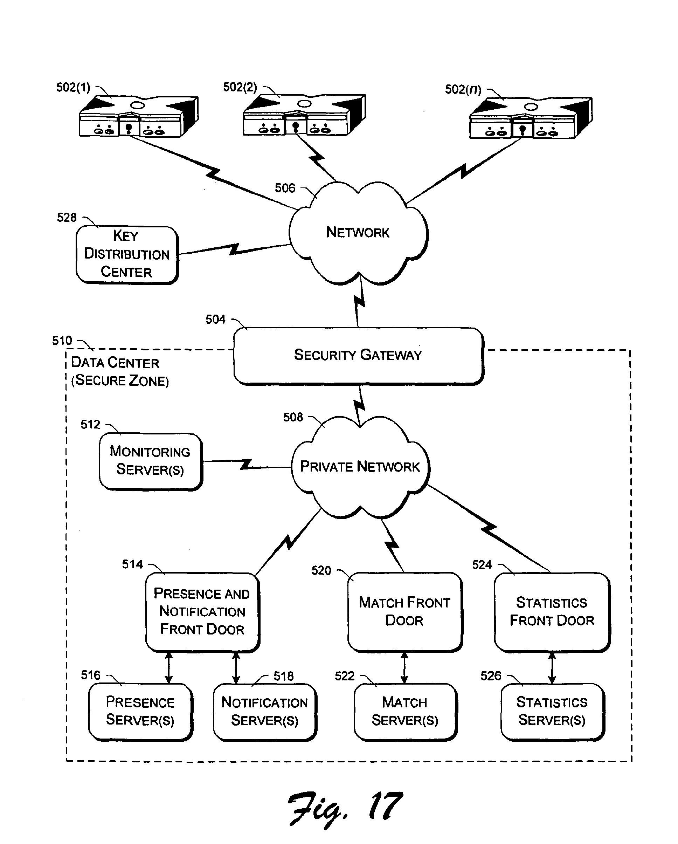

Fig. 17 is a block diagram of an exemplary online gaming environment 500. Multiple game consoles 502(1), 502(2), ..., 502(n) are coupled to a security gateway 504 via a network 506. Each game console 502 can be, for example, a game console 102 of Fig. 1. Network 506 represents any one or more of a variety of conventional data communications networks. Network 506 will typically include packet switched networks, but may also include circuit switched networks. Network 506 can include wire and/or wireless portions. In one exemplary implementation, network 506 includes the Internet and may optionally include one or more local area networks (LANs) and/or wide area networks (WANs). At least a part of network 506 is a public network, which refers to a network that is publicly-accessible. Virtually anyone can access the public network.

In some situations, network 506 includes a LAN (e.g., a home network), with a routing device situated between game console 502 and security gateway 504. This routing device may perform network address translation (NAT), allowing the multiple devices on the LAN to share the same IP address on the Internet, and also operating as a firewall to protect the device(s) on the LAN from access by malicious or mischievous users via the Internet.

Security gateway 504 operates as a gateway between public network 506 and a private network 508. Private network 508 can be any of a wide variety of conventional networks, such as a local area network. Private network 508, as well as other devices discussed in more detail below, is within a data center 510 that operates as a secure zone. Data center 510 is made up of trusted devices communicating via trusted communications. Thus, encryption and authentication within secure zone 510 is not necessary. The private nature of network 508 refers to the restricted accessibility of network 508 - access to network 508 is restricted to only certain individuals (e.g., restricted by the owner or operator of data center 510).

Security gateway 504 is a cluster of one or more security gateway computing devices. security gateway computing devices collectively implement security gateway 504. Security gateway 504 may optionally include one or more conventional load balancing devices that operate to direct requests to be handled by the security gateway computing devices to appropriate ones of those computing devices. This directing or load balancing is performed in a manner that attempts to balance the load on the various security gateway computing devices approximately equally (or alternatively in accordance with some other criteria).

Also within data center 510 are: one or more monitoring servers 512; one or more presence and notification front doors 514, one or more presence servers 516, one or more notification servers 518, and a profile store 528 (collectively implementing a presence and notification service or system 530); one or more match front doors 520 and one or more match servers 522 (collectively implementing a match service); and one or more statistics front doors 524 and one or more statistics servers 526 (collectively implementing a statistics service). The servers 516, 518, 522, and 526 provide services to game consoles 502, and thus can be referred to as service devices. Other service devices may also be included in addition to, and/or in place of, one or more of the servers 516, 518, 522, and 526. Additionally, although only one data center is shown in Fig. 17, alternatively multiple data centers may exist with which game consoles 502 can communicate. These data centers may operate independently, or alternatively may operate collectively (e.g., to make one large data center available to game consoles 502).

Game consoles 502 are situated remotely from data center 510, and access data center 510 via network 506. A game console 502 desiring to communicate with one or more devices in the data center logs in to the data center and establishes a secure communication channel between the console 502 and security gateway 504. Game console 502 and security gateway 504 encrypt and authenticate data packets being passed back and forth, thereby allowing the data packets to be securely transmitted between them without being understood by any other device that may capture or copy the data packets without breaking the encryption. Each data packet communicated from game console 502 to security gateway 504, or from security gateway 504 to game console 502 can have data embedded therein. This embedded data is referred to as the content or data content of the packet. Additional information may also be inherently included in the packet based on the packet type.

The secure communication channel between a console 502 and security gateway 504 is based on a security ticket. Console 502 authenticates itself and the current user(s) of console 502 to a key distribution center 528 and obtains, from key distribution center 528, a security ticket. Console 502 then uses this security ticket to establish the secure communication channel with security gateway 504. In establishing the secure communication channel with security gateway 504, the game console 502 and security gateway 504 authenticate themselves to one another and establish a session security key that is known only to that particular game console 502 and the security gateway 504. This session security key is used to encrypt data transferred between the game console 502 and the security gateway cluster 504, so no other devices (including other game consoles 502) can read the data. The session security key is also used to authenticate a data packet as being from the security gateway 504 or game console 502 that the data packet alleges to be from. Thus, using such session security keys, secure communication channels can be established between the security gateway 504 and the various game consoles 502.

Once the secure communication channel is established between a game console 502 and the security gateway 504, encrypted data packets can be securely transmitted between the two. When the game console 502 desires to send data to a particular service device in data center 510, the game console 502 encrypts the data and sends it to security gateway 504 requesting that it be forwarded to the particular service device(s) targeted by the data packet. Security gateway 504 receives the data packet and, after authenticating and decrypting the data packet, encapsulates the data content of the packet into another message to be sent to the appropriate service via private network 508. Security gateway 504 determines the appropriate service for the message based on the requested service(s) targeted by the data packet.

Similarly, when a service device in data center 510 desires to communicate data to a game console 502, the data center sends a message to security gateway 504, via private network 508, including the data content to be sent to the game console 502 as well as an indication of the particular game console 502 to which the data content is to be sent. Security gateway 504 embeds the data content into a data packet, and then encrypts the data packet so it can only be decrypted by the particular game console 502 and also authenticates the data packet as being from the security gateway 504.

Although discussed herein as primarily communicating encrypted data packets between security gateway 504 and a game console 502, alternatively some data packets may be partially encrypted (some portions of the data packets are encrypted while other portions are not encrypted). Which portions of the data packets are encrypted and which are not can vary based on the desires of the designers of data center 510 and/or game consoles 502. For example, the designers may choose to allow voice data to be communicated among consoles 502 so that users of the consoles 502 can talk to one another - the designers may further choose to allow the voice data to be unencrypted while any other data in the packets is encrypted. Additionally, in another alternative, some data packets may have no portions that are encrypted (that is, the entire data packet is unencrypted). It should be noted that, even if a data packet is unencrypted or only partially encrypted, the data packet is still authenticated.

Each security gateway device in security gateway 504 is responsible for the secure communication channel with typically one or more game consoles 502, and thus each security gateway device can be viewed as being responsible for managing or handling one or more game consoles. The various security gateway devices may be in communication with each other and communicate messages to one another. For example, a security gateway device that needs to send a data packet to a game console that it is not responsible for managing may send a message to all the other security gateway devices with the data to be sent to that game console. This message is received by the security gateway device that is responsible for managing that game console and sends the appropriate data to that game console. Alternatively, the security gateway devices may be aware of which game consoles are being handled by which security gateway devices - this may be explicit, such as each security gateway device maintaining a table of game consoles handled by the other security gateway devices, or alternatively implicit, such as determining which security gateway device is responsible for a particular game console based on an identifier of the game console.

Monitoring server(s) 512 operate to inform devices in data center 510 of an unavailable game console 502 or an unavailable security gateway device of security gateway 504. Game consoles 502 can become unavailable for a variety of different reasons, such as a hardware or software failure, the console being powered-down without logging out of data center 510, the network connection cable to console 502 being disconnected from console 502, other network problems (e.g., the LAN that the console 502 is on malfunctioning), etc. Similarly, a security gateway device of security gateway 504 can become unavailable for a variety of different reasons, such as hardware or software failure, the device being powered-down, the network connection cable to the device being disconnected from the device, other network problems, etc.

Each of the security gateway devices in security gateway 504 is monitored by one or more monitoring servers 512, which detect when one of the security gateway devices becomes unavailable. In the event a security gateway device becomes unavailable, monitoring server 512 sends a message to each of the other devices in data center 510 (servers, front doors, etc.) that the security gateway device is no longer available. Each of the other devices can operate based on this information as it sees fit (e.g., it may assume that particular game consoles being managed by the security gateway device are no longer in communication with data center 510 and perform various clean-up operations accordingly). Alternatively, only certain devices may receive such a message from the monitoring server 512 (e.g., only those devices that are concerned with whether security gateway devices are available).

Security gateway 504 monitors the individual game consoles 502 and detects when one of the game consoles 502 becomes unavailable. When security gateway 504 detects that a game console is no longer available, security gateway 504 sends a message to monitoring server 512 identifying the unavailable game console. In response, monitoring server 512 sends a message to each of the other devices in data center 510 (or alternatively only selected devices) that the game console is no longer available. Each of the other devices can then operate based on this information as it sees fit.

Presence server(s) 516 hold and process data concerning the status or presence of a given user logged in to data center 510 for online gaming. Notification server(s) 518 maintains multiple notification queues of outgoing messages destined for a player logged in to data center 510. Presence and notification front door 514 is one or more server devices that operate as an intermediary between security gateway 504 and servers 516 and 518. One or more load balancing devices (not shown) may be included in presence and notification front door 514 to balance the load among the multiple server devices operating as front door 514. Security gateway 504 communicates messages for servers 516 and 518 to the front door 514, and the front door 514 identifies which particular server 516 or particular server 518 the message is to be communicated to. By using front door 514, the actual implementation of servers 516 and 518, such as which servers are responsible for managing data regarding which users, is abstracted from security gateway 504. Security gateway 504 can simply forward messages that target the presence and notification service to presence and notification front door 514 and rely on front door 514 to route the messages to the appropriate one of server(s) 516 and servers) 518.

Match server(s) 522 hold and process data concerning the matching of online players to one another. An online user is able to advertise a game available for play along with various characteristics of the game (e.g., the location where a football game will be played, whether a game is to be played during the day or at night, the user's skill level, etc.). These various characteristics can then be used as a basis to match up different online users to play games together. Match front door 520 includes one or more server devices (and optionally a load balancing device(s)) and operates to abstract match server(s) 522 from security gateway 504 in a manner analogous to front door 514 abstracting server(s) 516 and server(s) 518.

Statistics server(s) 526 hold and process data concerning various statistics for online games. Statistics server(s) 526 can be, for example, the server device(s) of statistics system 104 of Fig. 1. The specific statistics used can vary based on the game designer's desires. Statistics front door 526 includes one or more server devices (and optionally a load balancing device(s)) and operates to abstract statistics server(s) 526 from security gateway 504 in a manner analogous to front door 514 abstracting server(s) 516 and server(s) 518.

Thus, it can be seen that security gateway 504 operates to shield devices in the secure zone of data center 510 from the untrusted, public network 506. Communications within the secure zone of data center 510 need not be encrypted, as all devices within data center 510 are trusted. However, any information to be communicated from a device within data center 510 to a game console 502 passes through security gateway cluster 504, where it is encrypted in such a manner that it can be decrypted by only the game console 502 targeted by the information.

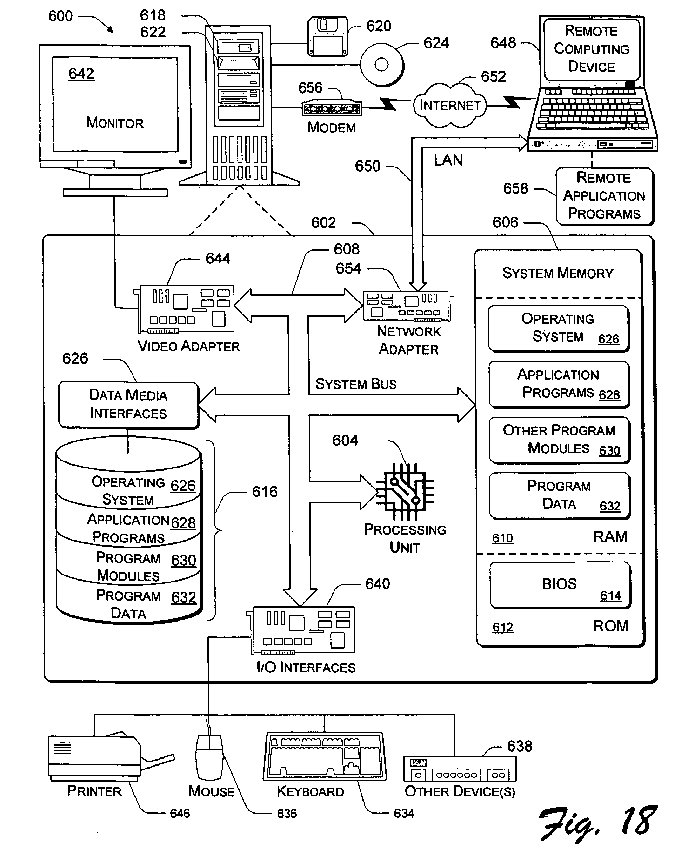

Fig. 18 illustrates a general computer environment 600, which can be used to implement the techniques described herein. The computer environment 600 is only one example of a computing environment and is not intended to suggest any limitation as to the scope of use or functionality of the computer and network architectures. Neither should the computer environment 600 be interpreted as having any dependency or requirement relating to any one or combination of components illustrated in the exemplary computer environment 600.

Computer environment 600 includes a general-purpose computing device in the form of a computer 602. Computer 602 can be, for example, a server device implementing at least a portion of system 104 of Fig. 1, a security gateway 504 of Fig. 17, a server 512, 516, 518, 522, and/or 526 of Fig. 17, or a front door 514, 520, or 524 of Fig. 17. The components of computer 602 can include, but are not limited to, one or more processors or processing units 604 (optionally including a cryptographic processor or co-processor), a system memory 606, and a system bus 608 that couples various system components including the processor 604 to the system memory 606.

The system bus 608 represents one or more of any of several types of bus structures, including a memory bus or memory controller, a peripheral bus, an accelerated graphics port, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

Computer 602 typically includes a variety of computer readable media. Such media can be any available media that is accessible by computer 602 and includes both volatile and non-volatile media, removable and non-removable media.

The system memory 606 includes computer readable media in the form of volatile memory, such as random access memory (RAM) 610, and/or non-volatile memory, such as read only memory (ROM) 612. A basic input/output system (BIOS) 614, containing the basic routines that help to transfer information between elements within computer 602, such as during start-up, is stored in ROM 612. RAM 610 typically contains data and/or program modules that are immediately accessible to and/or presently operated on by the processing unit 604.

Computer 602 may also include other removable/non-removable, volatile/non-volatile computer storage media. By way of example, Fig. 7 illustrates a hard disk drive 616 for reading from and writing to a non-removable, non-volatile magnetic media (not shown), a magnetic disk drive 618 for reading from and writing to a removable, non-volatile magnetic disk 620 (e.g., a "floppy disk"), and an optical disk drive 622 for reading from and/or writing to a removable, non-volatile optical disk 624 such as a CD-ROM, DVD-ROM, or other optical media. The hard disk drive 616, magnetic disk drive 618, and optical disk drive 622 are each connected to the system bus 608 by one or more data media interfaces 626. Alternatively, the hard disk drive 616, magnetic disk drive 618, and optical disk drive 622 can be connected to the system bus 608 by one or more interfaces (not shown).

The disk drives and their associated computer-readable media provide non-volatile storage of computer readable instructions, data structures, program modules, and other data for computer 602. Although the example illustrates a hard disk 616, a removable magnetic disk 620, and a removable optical disk 624, it is to be appreciated that other types of computer readable media which can store data that is accessible by a computer, such as magnetic cassettes or other magnetic storage devices, flash memory cards, CD-ROM, digital versatile disks (DVD) or other optical storage, random access memories (RAM), read only memories (ROM), electrically erasable programmable read-only memory (EEPROM), and the like, can also be utilized to implement the exemplary computing system and environment.

Any number of program modules can be stored on the hard disk 616, magnetic disk 620, optical disk 624, ROM 612, and/or RAM 610, including by way of example, an operating system 626, one or more application programs 628, other program modules 630, and program data 632. Each of such operating system 626, one or more application programs 628, other program modules 630, and program data 632 (or some combination thereof) may implement all or part of the resident components that support the distributed file system.

A user can enter commands and information into computer 602 via input devices such as a keyboard 634 and a pointing device 636 (e.g., a "mouse"). Other input devices 638 (not shown specifically) may include a microphone, joystick, game pad, satellite dish, serial port, scanner, and/or the like. These and other input devices are connected to the processing unit 604 via input/output interfaces 640 that are coupled to the system bus 608, but may be connected by other interface and bus structures, such as a parallel port, game port, or a universal serial bus (USB).

A monitor 642 or other type of display device can also be connected to the system bus 608 via an interface, such as a video adapter 644. In addition to the monitor 642, other output peripheral devices can include components such as speakers (not shown) and a printer 646 which can be connected to computer 602 via the input/output interfaces 640.

Computer 602 can operate in a networked environment using logical connections to one or more remote computers, such as a remote computing device 648. By way of example, the remote computing device 648 can be a personal computer, portable computer, a server, a router, a network computer, a peer device or other common network node, game console, and the like. The remote computing device 648 is illustrated as a portable computer that can include many or all of the elements and features described herein relative to computer 602.

Logical connections between computer 602 and the remote computer 648 are depicted as a local area network (LAN) 650 and a general wide area network (WAN) 652. Such networking environments are commonplace in offices, enterprise-wide computer networks, intranets, and the Internet.

When implemented in a LAN networking environment, the computer 602 is connected to a local network 650 via a network interface or adapter 654. When implemented in a WAN networking environment, the computer 602 typically includes a modem 656 or other means for establishing communications over the wide network 652. The modem 656, which can be internal or external to computer 602, can be connected to the system bus 608 via the input/output interfaces 640 or other appropriate mechanisms. It is to be appreciated that the illustrated network connections are exemplary and that other means of establishing communication link(s) between the computers 602 and 648 can be employed.

In a networked environment, such as that illustrated with computing environment 600, program modules depicted relative to the computer 602, or portions thereof, may be stored in a remote memory storage device. By way of example, remote application programs 658 reside on a memory device of remote computer 648. For purposes of illustration, application programs and other executable program components such as the operating system are illustrated herein as discrete blocks, although it is recognized that such programs and components reside at various times in different storage components of the computing device 602, and are executed by the data processor(s) of the computer.

Various modules and techniques may be described herein in the general context of computer-executable instructions, such as program modules, executed by one or more computers or other devices. Generally, program modules include routines, programs, objects, components, data structures, etc. that perform particular tasks or implement particular abstract data types. Typically, the functionality of the program modules may be combined or distributed as desired in various embodiments.

An implementation of these modules and techniques may be stored on or transmitted across some form of computer readable media. Computer readable media can be any available media that can be accessed by a computer. By way of example, and not limitation, computer readable media may comprise "computer storage media" and "communications media."

"Computer storage media" includes volatile and non-volatile, removable and non-removable media implemented in any method or technology for storage of information such as computer readable instructions, data structures, program modules, or other data. Computer storage media includes, but is not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other medium which can be used to store the desired information and which can be accessed by a computer.

"Communication media" typically embodies computer readable instructions, data structures, program modules, or other data in a modulated data signal, such as carrier wave or other transport mechanism. Communication media also includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared, and other wireless media. Combinations of any of the above are also included within the scope of computer readable media.

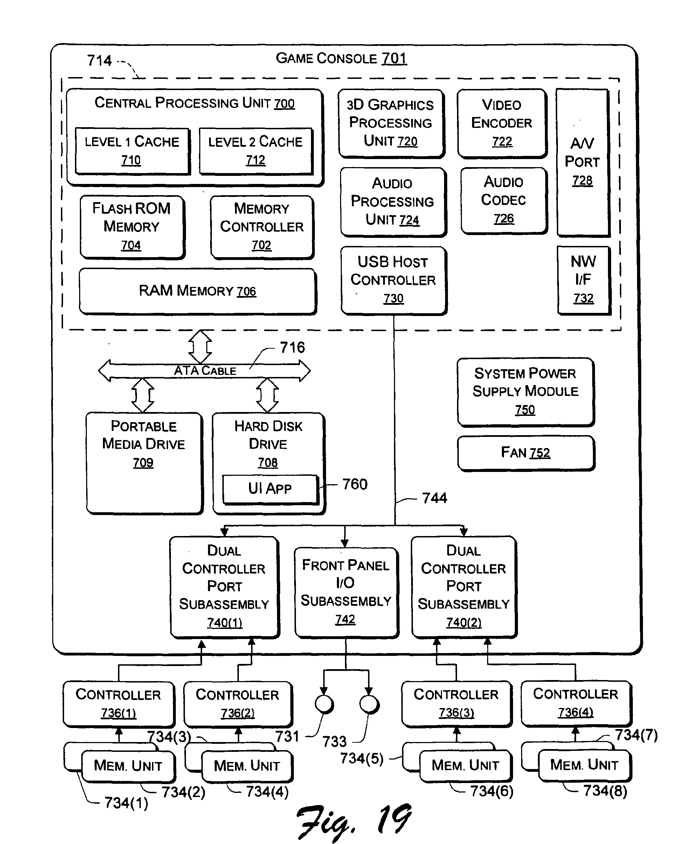

Fig. 19 shows functional components of a game console 701 in more detail. Game console 701 can be, for example, a game console 102 of Fig. 1. Game console 701 has a central processing unit (CPU) 700 and a memory controller 702 that facilitates processor access to various types of memory, including a flash ROM (Read Only Memory) 704, a RAM (Random Access Memory) 706, a hard disk drive 708, and a portable media drive 709. CPU 700 is equipped with a level 1 cache 710 and a level 2 cache 712 to temporarily store data and hence reduce the number of memory access cycles, thereby improving processing speed and throughput.

CPU 700, memory controller 702, and various memory devices are interconnected via one or more buses, including serial and parallel buses, a memory bus, a peripheral bus, and a processor or local bus using any of a variety of bus architectures. By way of example, such architectures can include an Industry Standard Architecture (ISA) bus, a Micro Channel Architecture (MCA) bus, an Enhanced ISA (EISA) bus, a Video Electronics Standards Association (VESA) local bus, and a Peripheral Component Interconnects (PCI) bus also known as a Mezzanine bus.

As one suitable implementation, CPU 700, memory controller 702, ROM 704, and RAM 706 are integrated onto a common module 714. In this implementation, ROM 704 is configured as a flash ROM that is connected to the memory controller 702 via a PCI (Peripheral Component Interconnect) bus and a ROM bus (neither of which are shown). RAM 706 is configured as multiple DDR SDRAM (Double Data Rate Synchronous Dynamic RAM) that are independently controlled by the memory controller 702 via separate buses (not shown). The hard disk drive 708 and portable media drive 709 are connected to the memory controller via the PCI bus and an ATA (AT Attachment) bus 716.

A 3D graphics processing unit 720 and a video encoder 722 form a video processing pipeline for high speed and high resolution graphics processing. Data is carried from the graphics processing unit 720 to the video encoder 722 via a digital video bus (not shown). An audio processing unit 724 and an audio codec (coder/decoder) 726 form a corresponding audio processing pipeline with high fidelity and stereo processing. Audio data is carried between the audio processing unit 724 and the audio codec 726 via a communication link (not shown). The video and audio processing pipelines output data to an A/V (audio/video) port 728 for transmission to the television or other display. In the illustrated implementation, the video and audio processing components 720-728 are mounted on the module 714.

Also implemented on the module 714 are a USB host controller 730 and a network interface 732. The USB host controller 730 is coupled to the CPU 700 and the memory controller 702 via a bus (e.g., PCI bus) and serves as host for the peripheral controllers 736(1)-736(4). The network interface 732 provides access to a network (e.g., Internet, home network, etc.) and may be any of a wide variety of various wire or wireless interface components including an Ethernet card, a modem, a Bluetooth module, a cable modem, and the like.

The game console 701 has two dual controller support subassemblies 740(1) and 740(2), with each subassembly supporting two game controllers 736(1)-736(4). A front panel I/O subassembly 742 supports the functionality of a power button 731 and a media drive eject button 733, as well as any LEDs (light emitting diodes) or other indicators exposed on the outer surface of the game console. The subassemblies 740(1), 740(2), and 742 are coupled to the module 714 via one or more cable assemblies 744.

Eight memory units 734(1)-734(8) are illustrated as being connectable to the four controllers 736(1)-736(4), i.e., two memory units for each controller. Each memory unit 734 offers additional storage on which games, game parameters, and other data may be stored. When inserted into a controller, the memory unit 734 can be accessed by the memory controller 702.

A system power supply module 750 provides power to the components of the game console 701. A fan 752 cools the circuitry within the game console 701. A console user interface (UI) application 760 is stored on the hard disk drive 708. When the game console is powered on, various portions of the console application 760 are loaded into RAM 706 and/or caches 710, 712 and executed on the CPU 700. Console application 760 presents a graphical user interface that provides a consistent user experience when navigating to different media types available on the game console.

Game console 701 implements a cryptography engine to perform common cryptographic functions, such as encryption, decryption, authentication, digital signing, hashing, and the like. The cryptography engine may be implemented as part of the CPU 700, or in software stored on the hard disk drive 708 that executes on the CPU, so that the CPU is configured to perform the cryptographic functions. Alternatively, a cryptographic processor or co-processor designed to perform the cryptographic functions may be included in game console 701.

Game console 701 may be operated as a standalone system by simply connecting the system to a television or other display. In this standalone mode, game console 701 allows one or more players to play games, watch movies, or listen to music. However, with the integration of broadband connectivity made available through the network interface 732, game console 701 may further be operated as a participant in online gaming, as discussed above.

It should be noted that the group identifiers discussed herein are identifiers and additional information is not encoded therein. For example, there is no assurance that consecutively numbered groups have consecutive rating ranges (e.g., group 2 may have a range of 87-89 and group 64 may have a range of 90-92). Alternatively, the group identifiers may be implemented in a manner that does encode or imply additional information or relationship(s).

Although the description above uses language that is specific to structural features and/or methodological acts, it is to be understood that the invention defined in the appended claims is not limited to the specific features or acts described. Rather, the specific features and acts are disclosed as exemplary forms of implementing the invention.

## Claims

1. A method comprising:
receiving, from a game console, a score of a user ;
identifying, based at least in part on the score, a location in a score table where an identifier of the user is to be inserted;
assigning the user to one of a plurality of groups;
modifying a count of users associated with the group to which the user is assigned;
associating, with the identifier of the user, a relative position of the user in the assigned group, wherein the associating is based at least in part on the user's score; and
modifying, for each user in the assigned group that has a lower score than the user, a relative position associated with each such user.

2. A method as recited in claim I, wherein modifying the count of users comprises incrementing the count of users by one.

3. A method as recited in claim 1, wherein modifying the relative position associated with each such user comprises incrementing the relative position of each such user by one.

4. A method as recited in claim 1, wherein the score table includes, for each of a plurality of users for which scores are received, the following:
an identifier of the user;
an identifier of one of the plurality of groups to which the user is assigned;
the score of the user; and
the relative position of the user within the group to which the user is assigned, wherein the relative position is dependent on both the score of the user and the scores of other users within the group.

5. A method as recited in claim 1, wherein the score of the user is associated with a game played by the user, the method further comprising:
identifying, based on the game played by the user, one of a plurality of score tables into which the identifier of the user is to be inserted.

6. A method as recited in claim 1, further comprising:
maintaining a plurality of score tables, wherein each score table is associated with a different one of a plurality of game titles; and
identifying which of the plurality of score tables into which the identifier of the user is to be inserted based at least in part on which of the plurality of game titles the score of the user is associated with.

7. A method as recited in claim 1, wherein each of the plurality of groups has an associated range of scores, wherein each user assigned to the group has a score within the range of scores associated with the group.

8. A method as recited in claim 1, wherein assigning the user to one of the plurality of groups comprises:
identifying whether a single group has an associated range of scores that includes the user's score or whether multiple groups have an associated range of scores that include the user's score;
if a single group exists, then assigning the user to the single group; and
if multiple groups exist, then identifying one of the multiple groups that has a quantity of users assigned to it that is less than a threshold amount, and assigning the user to the one of the multiple groups.

9. A method as recited in claim 1, further comprising:
identifying a node of a tree structure associated with the group to which the user is assigned, wherein the tree structure is used to assist in generating user rankings;
incrementing by one a count associated with the node; and
incrementing by one a count associated with each node of the tree that is situated in a path from the node to a root node of the tree.

10. A method as recited in claim 9, further comprising storing the trees structure in a persistent store.

11. A method as recited in claim 1, further comprising:
checking whether a quantity of users associated with the group to which the user is assigned is at a threshold amount; and
if the quantity is at the threshold amount, then splitting the group into multiple groups and assigning each of the users associated with the group to one of the multiple groups.

12. A method as recited in claim 1, wherein each of the plurality of groups has a group table having a plurality of entries, each entry including:
an identifier of the group ;
a range of scores associated with the group; and
a value to indicate whether the count is equal to a threshold value.

13. A method as recited in claim 12, wherein each entry further includes a count of a number of users assigned to the group.

14. A method comprising:
receiving, from a game console, an identifier of a user ;
identifying, in a rating table, an entry that includes the identifier;
identifying one of a plurality of rating groups to which the user is assigned;
modifying a count of users associated with the rating group to which the user is assigned; and
modifying, for each other user in the rating group to which the user is assigned that has a lower rating than the user, a relative position associated with each such user.

15. A method as recited in claim 14, wherein modifying the count of users comprises decrementing the count of users by one.

16. A method as recited in claim 14, wherein modifying the relative position associated with each such user comprises incrementing the relative position associated with each such user by one.

17. A method as recited in claim 14, wherein the rating table includes, for each of a plurality of users for which ratings are stored, the following:
an identifier of the user;
an identifier of one of the plurality of rating groups to which the user is assigned;
the rating of the user; and
the relative position of the user within the rating group to which the user is assigned, wherein the relative position is dependent on both the rating of the user and the ratings of other users assigned to the rating group.

18. A method as recited in claim 14, further comprising:
identifying a node of a tree structure associated with the rating group to which the user is assigned, wherein the tree structure is used to assist in generating user rankings ;
decrementing by one a count associated with the node; and
decrementing by one a count associated with each node of the tree that is situated in a path from the node to a root node of the tree.

19. One or more computer readable media having stored thereon a plurality of instructions that, when executed by one or more processors, causes the one or more processors to:
receive, from a game console, an identifier of a user and a new rating for the user ;
identify, in a rating table, an entry that includes the identifier;
identify one of a plurality of groups to which the user was previously assigned;
decrement a count of users associated with the group to which the user was previously assigned;
increment, for each other user in the group to which the user was previously assigned that has a lower rating than the user, a relative position associated with each such user ;
identify, based at least in part on the new rating, a new location in the rating table where the identifier of the user is to be inserted; .
assign the user to a new group of the plurality of groups;
increment a count of users associated with the new group;
associate, with the identifier of the user, a relative position of the user in the new group, wherein the association is based at least in part on the user's rating; and
decrement, for each other user in the new group that has a lower rating than the user, a relative position associated with each such user.

20. One or more computer readable media as recited in claim 19, wherein the rating table includes, for each of a plurality of users for which ratings are stored, the following:
an identifier of the user ;
an identifier of one of the plurality of groups to which the user is assigned;
the rating of the user; and
the relative position of the user within the group to which the user is assigned, wherein the relative position is dependent on both the rating of the user and the ratings of other users assigned to the group.

21. One or more computer readable media as recited in claim 19, wherein the plurality of instructions further cause the one or more processors to:
identify a node of a tree structure associated with the new group, wherein the tree structure is used to assist in generating user rankings;
increment by one a count associated with the node; and
increment by one a count associated with each node of the tree that is situated in a path from the node to a root node of the tree.

22. One or more computer readable media as recited in claim 19, wherein each of the plurality of groups has a group table having a plurality of entries, and wherein each entry includes:
an identifier of the group;
a range of ratings associated with the group; and
a value to indicate whether the count is equal to a threshold value.

23. One or more computer readable media as recited in claim 22, wherein each entry further includes a count of a number of users assigned to the group.

24. One or more computer readable media as recited in claim 19, wherein the plurality of instructions further cause the one or more processors to:
receive a request to retrieve a ranking for the user, wherein the ranking indicates how a rating associated with the user compares to other ratings associated with other users;
identify a leaf node of a tree, wherein the leaf node corresponds to the new group;
traverse a path in the tree from the leaf node to a root node of the tree, summing selected counts along the path;
identify the relative position of the identifier of the user in the new group; and
generate, as the requested ranking, a sum of the relative position and the summation of selected counts along the path.

25. One or more computer readable media having stored thereon a plurality of instructions that, when executed by one or more processors, causes the one or more processors to:
receive a user identifier for which a ranking is to be retrieved, wherein the ranking indicates how a rating associated with the identified user compares to other ratings associated with other users ;
identify which of a plurality of groups the user identifier is assigned to;
identify a leaf node of a tree, wherein the leaf node corresponds to the group to which the user identifier is assigned;
traverse a path in the tree from the leaf node to a root node of the tree, summing selected user counts along the path;
identify a relative position of the user identifier within the group to which the user identifier is assigned; and
generate, as the ranking, a sum of the relative position and the summation of selected user counts along the path.

26. One or more computer readable media as recited in claim 25, wherein the ratings comprise game scores.

27. One or more computer readable media as recited in claim 25, wherein the ratings comprise game scores from different users playing a same game title on different game console platforms.

28. One or more computer readable media as recited in claim 25, wherein the instructions that cause the one or more processors to perform the summing selected user counts along the path comprise instructions that cause the one or more processors to:
set an initial total count value to zero; and
for each of the leaf node and every node along the path between the leaf node and the root node,
check whether the node has a left sibling, and
add a count value associated with the left sibling to the total count value.

29. One or more computer Teadable media as recited in claim 25, wherein the tree comprises a plurality of leaf nodes, wherein each leaf node corresponds to one of the plurality of groups, wherein each leaf node has an associated count value that identifies a count of users that are assigned to the corresponding group, wherein multiple levels of nodes exist in the tree between the plurality of leaf nodes and a root node of the tree, and wherein each node in the multiple levels of nodes has an associated count of users that is a sum of the counts of users of the children of the node.

30. One or more computer readable media as recited in claim 25, wherein the tree comprises a binary tree.

31. One or more computer readable media as recited in claim 25, wherein the user identifier is an identifier of a friend of a user initiating a request to retrieve the ranking.

32. One or more computer readable media having stored thereon a plurality of instructions that, when executed by one or more processors of a game console, causes the one or more processors to:
identify a plurality of friends of a user of the game console;
access a server to retrieve, for each of the plurality of friends, an indication of how the plurality of friends and the user rank for a game title compared to one another; and
display, to the user, how well the plurality of friends and the user rank for the game title compared to one another.

33. One or more computer readable media as recited in claim 32, wherein the indication of how the plurality of friends and the rank for the game title compared to one another comprises a ranking generated by the statistics server.

34. One or more computer readable media as recited in claim 32, wherein the indication of how the plurality of friends and the rank for the game title compared to one another comprises, for each of the plurality of friends and the user, a score associated with the friend or user.

35. One or more computer readable media having stored thereon a plurality of instructions that, when executed by one or more processors, causes the one or more processors to:
receive a request to identify a window of user rankings to retrieve, wherein the request includes a reference indication of where the window is situated;
retrieve one or more user rankings that are lower than the user ranking associated with the reference indication;
retrieve one or more user rankings that are higher than the user ranking associated with the reference indication; and
return, as at least part of the window of user rankings, the retrieved rankings.

36. One or more computer readable media as recited in claim 35, wherein the reference indication comprises a user ranking.

37. One or more computer readable media as recited in claim 35, wherein the reference indication comprises a user identifier, and wherein the instructions further cause the one or more processors to retrieve the user ranking associated with the reference indication, and return, as at least part of the window of user rankings, the retrieved user ranking.

38. One or more computer readable media as recited in claim 35, wherein the request further includes an indication of a number of user rankings that are lower than the user ranking associated with the reference indication to include in the window of user rankings, and an indication of a number of user rankings that are higher than the user ranking associated with the reference indication to include in the window of user rankings.

39. One or more computer readable media as recited in claim 35, wherein the instructions that cause the one or more processors to retrieve a user ranking further comprise instructions that cause the one or more processors to:
receive a user identifier for which a ranking is to be retrieved;
identify which of a plurality of rating groups the user identifier is assigned to;
identify a leaf node of a tree, wherein the leaf node corresponds to the rating group to which the user identifier is assigned;
traverse a path in the tree from the leaf node to a root node of the tree, summing selected user counts along the path;
identify a relative position of the user identifier within the rating group to which the user identifier is assigned; and
generate, as the ranking, a sum of the relative position and the summation of selected user counts along the path.

40. One or more computer readable media as recited in claim 39, wherein the instructions that cause the one or more processors to perform the summing selected user counts along the path comprise instructions that cause the one or more processors to:
set an initial total count value to zero; and
for each of the leaf node and every node along the path between the leaf node and the root node,
check whether the node has a left sibling, and
add a count value associated with the left sibling to the total count value.

41. One or more computer readable media having stored thereon a plurality of instructions that, when executed by one or more processors, causes the one or more processors to:
establish a plurality of rating groups;
assign each user, based on a rating of the user, to one of the plurality of rating groups;
generate a relative position of each user within the assigned group, wherein for each user the relative position is generated based at least in part on the rating of the user and the ratings of any other users assigned to the same group ;
split, when a number of users in a group reaches a threshold amount, the group into multiple groups, each of the multiple groups including one or more users previously assigned to the group; and
use a data structure to determine a ranking of a particular user based at least in part on both the relative position of the particular user within the group to which the user is assigned and a number of users in each of one or more groups ranked higher than the group assigned to the user.

42. One or more computer readable media as recited in claim 41, wherein the data structure comprises a tree structure.

43. One or more computer readable media as recited in claim 41, wherein the rating comprises a score of a game played by the user on a remote game console.

44. One or more computer readable media as recited in claim 41, wherein for each user the relative position is further generated independent of ratings assigned to any other users that are assigned to other groups of the plurality of rating groups.

45. One or more computer readable media as recited in claim 41, wherein the multiple groups comprise two groups.

46. One or more computer readable media as recited in claim 41, wherein each of the multiple groups includes a number of users that is approximately equal to the number of users in each of the other of the multiple groups.

47. One or more computer readable media as recited in claim 41, wherein one of the multiple groups comprises the group that was split.

48. One or more computer readable media as recited in claim 41, wherein the data structure comprises a uniform-depth tree having a plurality of leaf nodes, wherein each of the plurality of leaf nodes corresponds to one group of the plurality of rating groups.

49. One or more computer readable media as recited in claim 41, wherein the data structure is maintained in random access memory.

50. One or more computer readable media as recited in claim 41, wherein the instructions further cause the one or more processors to maintain a rating table having a plurality of entries, wherein each entry is associated with a particular user and includes:
an identifier of the particular user;
an identifier of one of the plurality of rating groups to which the particular user is assigned ;
the rating of the particular user; and
the relative position of the particular user within the rating group to which the particular user is assigned, wherein the relative position is dependent on both the rating of the particular user and the rating of other users within the rating group.

51. One or more computer readable media as recited in claim 41, wherein the instructions further cause the one or more processors to maintain a groups table having a plurality of entries, wherein each entry is associated with a particular group and includes:
an identifier of the group;
a range of ratings associated with the group; and
a value to indicate whether the count is equal to a threshold value.

52. One or more computer readable media as recited in claim 51, wherein each entry further includes a count of a number of users assigned to the group.

53. One or more computer readable media as recited in claim 41, wherein the data structure comprises a tree and wherein the instructions further cause the one or more processors to:
receive a user identifier for which a ranking is to be retrieved, wherein the ranking indicates how a rating associated with the identified user compares to other ratings associated with other users;
identify which of a plurality of groups the user identifier is assigned to;
identify a leaf node of the tree, wherein the leaf node corresponds to the group to which the user identifier is assigned ;
traverse a path in the tree from the leaf node to a root node of the tree, summing selected user counts along the path ;
identify a relative position of the user identifier within the group to which the user identifier is assigned; and
generate, as the ranking, a sum of the relative position and the summation of selected user counts along the path.

54. One or more computer readable media as recited in claim 53, wherein the instructions that cause the one or more processors to perform the summing selected user counts along the path comprise instructions that cause the one or more processors to:
set an initial total count value to zero; and
for each of the leaf node and every node along the path between the leaf node and the root node,
check whether the node has a left sibling, and
add a count value associated with the left sibling to the total count value.

55. One or more computer readable media as recited in claim 41, wherein the instructions further cause the one or more processors to:
receive a request to identify a window of user rankings to retrieve, wherein the request includes a reference indication of where the window is situated ;
retrieve one or more user rankings that are lower than the user ranking associated with the reference indication ;
retrieve one or more user rankings that are higher than the user ranking associated with the reference indication; and
return, as at least part of the window of user rankings, the retrieved rankings.

56. A system comprising:
a persistent store device configured to,
maintain a rating table that assigns user identifiers to bucket identifiers, and further stores both a rating for the user identifier and a relative position for the user identifier, wherein the relative position is based at least in part on the rating for the user identifier and the ratings of other user identifiers assigned to the same bucket, and
maintain a bucket table that stores, for each of a plurality of buckets, a range of ratings for user identifiers assigned to the bucket and a count of user identifiers assigned to the bucket; and
a statistics server device, coupled to the persistent store device, and configured to,
split, when a number of users assigned to a bucket reaches or exceeds a threshold amount, the bucket into multiple buckets, each of the multiple buckets including one or more users previously assigned to the bucket, and
use a tree structure to determine a ranking of a particular user based at least in part on both the relative position of the particular user within the bucket to which the user is assigned and a number of users in each of one or more buckets ranked higher than the bucket to which the user is assigned.

57. A system comprising:
a gateway device configured to receive requests from game consoles via an insecure network and communicate the requests to other devices via a secure network;
a front door device configured to receive requests via the secure network from the security gateway and translate the requests to a format expected by a statistics server device; and
a persistent store device configured to,
maintain a rating table that assigns user identifiers to bucket identifiers, and further stores both a rating for the user identifier and a relative position for the user identifier, wherein the relative position is based at least in part on the rating for the user identifier and the ratings of other user identifiers assigned to the same bucket,
maintain a bucket table that stores, for each of a plurality of buckets, a range of ratings for user identifiers assigned to the bucket and a count of user identifiers assigned to the bucket; and
wherein the statistics server device is configured to,
split, when a number of users assigned to a bucket reaches a threshold amount, the bucket into multiple buckets, each of the multiple buckets including one or more users previously assigned to the bucket, and
use a tree structure to determine a ranking of a particular user based at least in part on both the relative position of the particular user within the bucket to which the user is assigned and a number of users in each of one or more buckets ranked higher than the bucket to which the user is assigned.
